(19)

Europäisches
Patentamt
European
Patent Office
Office européen
des brevets

(11) **EP 2 709 386 A1**

(12) **EUROPEAN PATENT APPLICATION**

(43) Date of publication:
**19.03.2014 Bulletin 2014/12**

(51) Int Cl.:
***H04W 8/00*** *(2009.01)*

(21) Application number: **13177562.9**

(22) Date of filing: **23.07.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.09.2012 US 201213604944**

(71) Applicant: **Nokia Corporation
02150 Espoo (FI)**

(72) Inventors:
• **Turunen, Markku
00660 Helsinki (FI)**

• **Kasslin, Mika
02770 Espoo (FI)**
• **Rantala, Enrico
14500 Iittala (FI)**
• **Leppänen, Kari J.
00870 Helsinki (FI)**
• **Virtanen, Sami
02180 Espoo (FI)**

(74) Representative: **Nokia Corporation
Intellectual Property Department
Keilalahdentie 4
02150 Espoo (FI)**

(54) **Method, apparatus, and computer program product for exchanging of information between wireless devices for joining**

(57)    Method, apparatus, and computer program product example embodiments exchange information between wireless devices for joining. In example embodiments, a method comprises receiving wireless messages, each of the wireless messages including a first timing synchronization function value of a respective one of candidate beacon groups from which the wireless messages are sent; calculating a first difference between a selected target timing synchronization function value and a timing synchronization function value of the apparatus; receiving subsequent wireless messages, each of the subsequent wireless messages including a second timing synchronization function value of a respective one of the candidate beacon groups from which the subsequent wireless messages are sent; calculating second differences between the subsequently received second timing synchronization function values and the timing synchronization function value of the apparatus; and selecting a target beacon group for joining having a second difference within a predefined threshold from the first difference.

EP 2 709 386 A1

**Description**

FIELD:

The field of the invention relates to wireless short-range communication and more particularly to exchanging information between wireless devices for joining.

BACKGROUND:

Modem society has adopted, and is becoming reliant upon, wireless communication devices for various purposes, such as, connecting users of the wireless communication devices with other users. Wireless communication devices can vary from battery powered handheld devices to household and / or commercial devices utilizing electrical network as a power source. Due to rapid development of the wireless communication devices a number of areas capable of enabling entirely new types of communication applications have emerged.

Cellular networks facilitate communication over large geographic areas. These network technologies have commonly been divided by generations, starting in the late 1970s to early 1980s with first generation (1 G) analog cellular telephones that provided baseline voice communications, to modem digital cellular telephones. GSM is an example of a widely employed 2G digital cellular network communicating in the 900 MHZ/1.8 GHZ bands in Europe and at 850 MHz and 1.9 GHZ in the United States. While long-range communication networks, such as GSM, are a well-accepted means for transmitting and receiving data, due to cost, traffic and legislative concerns, these networks may not be appropriate for all data applications.

Short-range communication technologies provide communication solutions that avoid some of the problems seen in large cellular networks. Bluetooth™ is an example of a short-range wireless technology quickly gaining acceptance in the marketplace. In addition to Bluetooth™ other popular short-range communication technologies include Bluetooth™ Low Energy, IEEE 802.11 wireless local area network (WLAN), Wireless USB (WUSB), Ultra Wide-band (UWB), ZigBee (IEEE 802.15.4, IEEE 802.15.4a), and ultra-high frequency radio frequency identification (UHF RFID) technologies. All of these wireless communication technologies have features that make them appropriate for various applications.

Applications for short-range wireless devices are evolving to include awareness applications providing the device with an awareness about the local network environment. Awareness applications have the promise of extending business and social networking by enabling users to share local contextual data in a peer-to-peer fashion by using their mobile wireless devices. For example, users may be able to share information in real-time for local-area business networking, social networking, dating, personal safety, advertising, publishing, and searching.

SUMMARY:

Method, apparatus, and computer program product example embodiments exchange information between wireless devices for joining..

According to an example embodiment of the invention, a method comprises:

receiving, by an apparatus, one or more wireless messages, each of the one or more wireless messages including a first timing synchronization function value of a respective one of one or more candidate beacon groups from which the one or more wireless messages are sent;

calculating a first difference between a selected target timing synchronization function value and a timing synchronization function value of the apparatus;

receiving, by the apparatus, subsequent wireless messages, each of the subsequent one or more wireless messages including a second timing synchronization function value of a respective one of the one or more candidate beacon groups from which the subsequent wireless messages are sent;

calculating, by the apparatus, second differences between the subsequently received one or more second timing synchronization function values and the timing synchronization function value of the apparatus; and

selecting, by the apparatus, a target beacon group for joining having a second difference within a predefined threshold from the first difference.

According to an example embodiment of the invention, a method comprises:

selecting, by the apparatus, a largest timing synchronization function value from the received one or more first timing synchronization function values as a target timing synchronization function value;

According to an example embodiment of the invention, a method comprises:

determining that the first difference exceeds a predetermined threshold;

According to an example embodiment of the invention, a method comprises:

joining by the apparatus, the selected target beacon group for joining

According to an example embodiment of the invention, a method comprises:

adjusting by the apparatus, the timing synchronization function value of the apparatus, based on the second timing synchronization function value, when the second difference is within a predefined threshold from the first difference.

According to an example embodiment of the invention, a method comprises:

wherein the one or more received wireless messages is at least one of a beacon message and a beacon response message.

According to an example embodiment of the invention, a method comprises:

wherein the apparatus performs at least one of remaining in an awake state while scanning for wireless messages, entering a doze state and waking up for scanning for wireless messages, or immediately adopting a timing synchronization function value attributed to a beacon group that the apparatus desires to join, without waiting for the received wireless messages.

According to an example embodiment of the invention, a method comprises:

wherein the one or more candidate beacon groups are part of an IEEE 802.11 ad hoc network.

According to an example embodiment of the invention, an apparatus comprises:

at least one processor;

at least one memory including computer program code;

the at least one memory and the computer program code configured to, with the at least one processor, cause the apparatus at least to:

receive one or more wireless messages, each of the one or more wireless messages including a first timing synchronization function value of a respective one of one or more candidate beacon groups from which the one or more wireless messages are sent;

calculate a first difference between a selected target timing synchronization function value and a timing synchronization function value of the apparatus;

receive subsequent wireless messages, each of the subsequent one or more wireless messages including a second timing synchronization function value of a respective one of the one or more candidate beacon groups from which the subsequent wireless messages are sent;

calculate second differences between the subsequently received one or more second timing synchronization function values and the timing synchronization function value of the apparatus; and

select a target beacon group for joining having a second difference within a predefined threshold from the first difference.

According to an example embodiment of the invention, an apparatus comprises:

the at least one memory and the computer program code configured to, with the at least one processor, cause the apparatus at least to:

select a largest timing synchronization function value from the received one or more first timing synchronization function values as a target timing synchronization function value;

According to an example embodiment of the invention, an apparatus comprises:

the at least one memory and the computer program code configured to, with the at least one processor, cause the apparatus at least to:

determine that the first difference exceeds a predetermined threshold;

According to an example embodiment of the invention, an apparatus comprises:

the at least one memory and the computer program code configured to, with the at least one processor, cause the apparatus at least to:

join the selected target beacon group for joining

According to an example embodiment of the invention, an apparatus comprises:

the at least one memory and the computer program code configured to, with the at least one processor, cause the apparatus at least to:

adjust the timing synchronization function value of the apparatus, based on the second timing synchronization function value, when the second difference is within a predefined threshold from the first difference.

According to an example embodiment of the invention, an apparatus comprises:

wherein the one or more received wireless messages is at least one of a beacon message and a beacon response message.

According to an example embodiment of the invention, an apparatus comprises:

wherein the apparatus performs at least one of remaining in an awake state while scanning for wireless messages, entering a doze state and waking up for scanning for wireless messages, or immediately adopting a timing synchronization function value attributed to a beacon group that the apparatus desires to join, without waiting for the received wireless messages.

According to an example embodiment of the invention, an apparatus comprises:

wherein the one or more candidate beacon groups are part of an IEEE 802.11 ad hoc network.

According to an example embodiment of the invention, a computer program product comprises computer executable program code recorded on a computer readable non-transitory storage medium, the computer executable program code comprising:

code for receiving, by an apparatus, one or more wireless messages, each of the one or more wireless messages including a first timing synchronization function value of a respective one of one or more candidate beacon groups from which the one or more wireless messages are sent;

code for calculating a first difference between a selected target timing synchronization function value and a timing synchronization function value of the apparatus;

code for receiving, by the apparatus, subsequent wireless messages, each of the subsequent one or more wireless messages including a second timing synchronization function value of a respective one of the one or more candidate beacon groups from which the subsequent wireless messages are sent;

code for calculating, by the apparatus, second differences between the subsequently received one or more second timing synchronization function values and the timing synchronization function value of the apparatus; and

code for selecting, by the apparatus, a target beacon group for joining having a second difference within a predefined threshold from the first difference.

According to an example embodiment of the invention, a computer program product comprises:

code for joining by the apparatus, the target beacon group for joining having a second difference within a predefined threshold from the first difference.

The resulting example embodiments exchange information between wireless devices for joining.

## DESCRIPTION OF THE FIGURES:

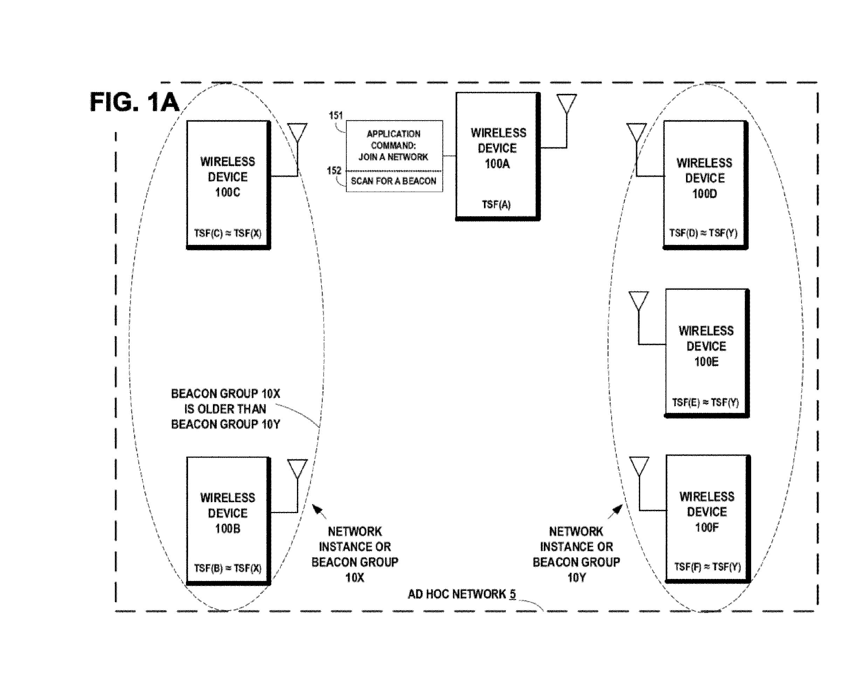

Figure 1A illustrates an example network diagram of an ad hoc network including two ad hoc network instances, one an older beacon group 10X and the other a younger beacon group 10Y, where all wireless devices in proximity within a beacon group may communicate with each other, wherein an application in wireless device 100A commands the device to join to a network and the device begins scanning for beacons, in accordance with at least one embodiment of the present invention.

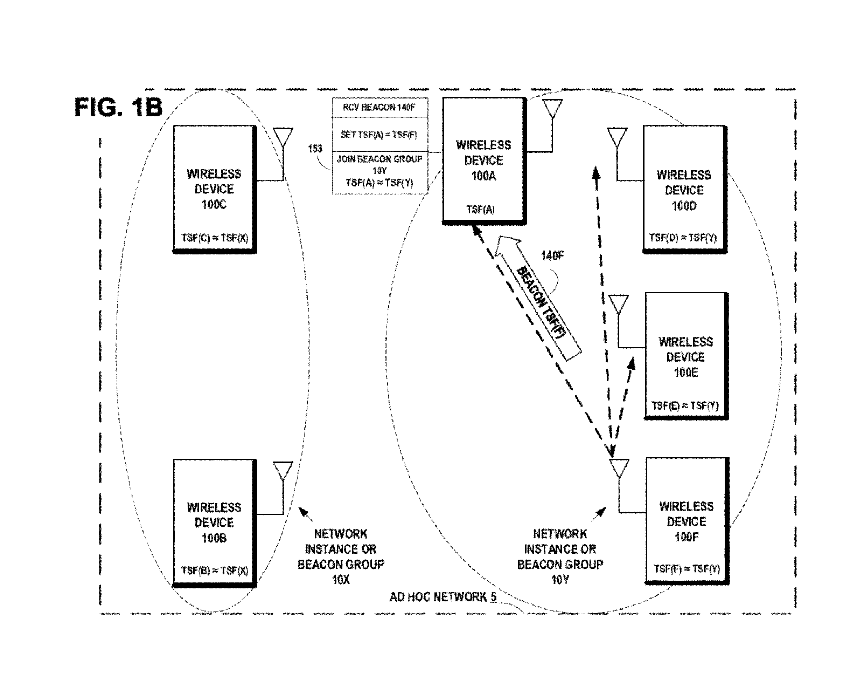

Figure 1B illustrates the example network diagram of Figure 1A, wherein wireless device 100F in the younger beacon group 10Y transmits a beacon that is received by wireless devices 100A, 100D, and 100E, wireless device 100A sets its timing synchronization function TSF(A) to the value of TSF(F) in the received beacon, and joins the beacon group 10Y, in accordance with at least one embodiment of the present invention.

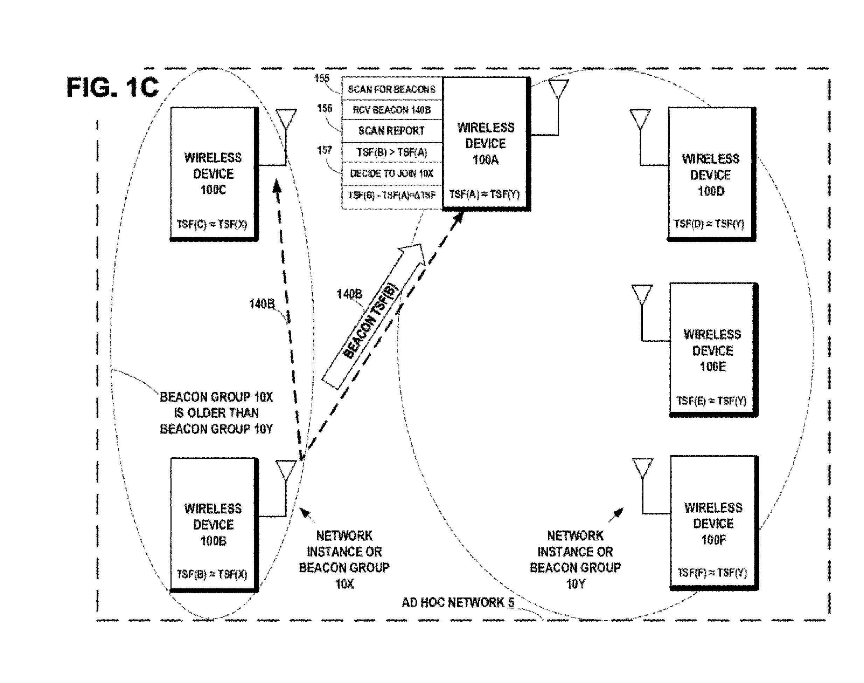

Figure 1C illustrates the example network diagram of Figure 1B, wherein wireless device 100A is scanning for beacons. Wireless device 100B in the older beacon group 10X transmits a beacon that is received by wireless device 100A. The LLC in wireless device 100A compares its time synchronization function TSF(A), which approximates the TSF(Y) of the younger beacon group 10Y, with the value of TSF(B) in the received beacon, which approximates the TSF(X) of the older beacon group 10X, and determines that the beacon group 10X is older than its existing beacon group 10Y. The LLC in wireless device 100A decides to join the older beacon group 10X. The LLC computes the absolute difference of the TSF values TSF(B) - TSF(A)=ΔTSF. In accordance with an example embodiment of the invention, the absolute difference of the TSF values ΔTSF is buffered in device 100A, for example in the neighbor table. The buffered value of ΔTSF may be used to accurately identify later received beacons from devices that are members of the beacon group 10X, in accordance with at least one embodiment of the present invention. The device 100A waits to join the beacon group 10X until the next beacon is received from a device in that beacon group, in accordance with at least one embodiment of the present invention.

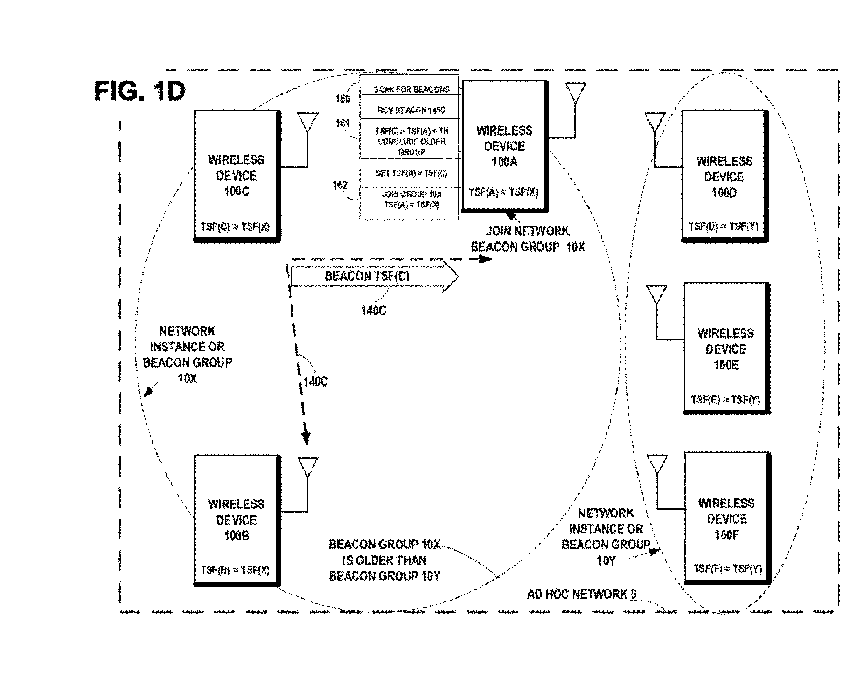

Figure 1D illustrates the example network diagram of Figure 1C, wherein wireless device 100A that is still a member of beacon group 10Y, joins to an older beacon group 10X using the normal WLAN join mechanism. The wireless device 100A scans for beacons from other beacon groups. The wireless device 100C in the older beacon group 10X transmits a beacon 140C that is received by wireless devices 100A and 100B. The receipt of beacon 140C from device 100C triggers joining to the beacon group 10X. MAC calculates the absolute difference of the TSF values TSF(C) - TSF(A) = ΔTSF . If ΔTSF is positive then MAC determines that the beacon 140C originated from an older beacon group . The MAC therefore sets the TSF value TSF(A) of the device A equal to TSF(C), thereby causing device 100A to join the beacon group 10X. Wireless device 100A now has a TSF value of TSF(C) that is approximately equal to the value TSF(X) attributed to whole beacon group 10X, in accordance with at least one embodiment of the present invention.

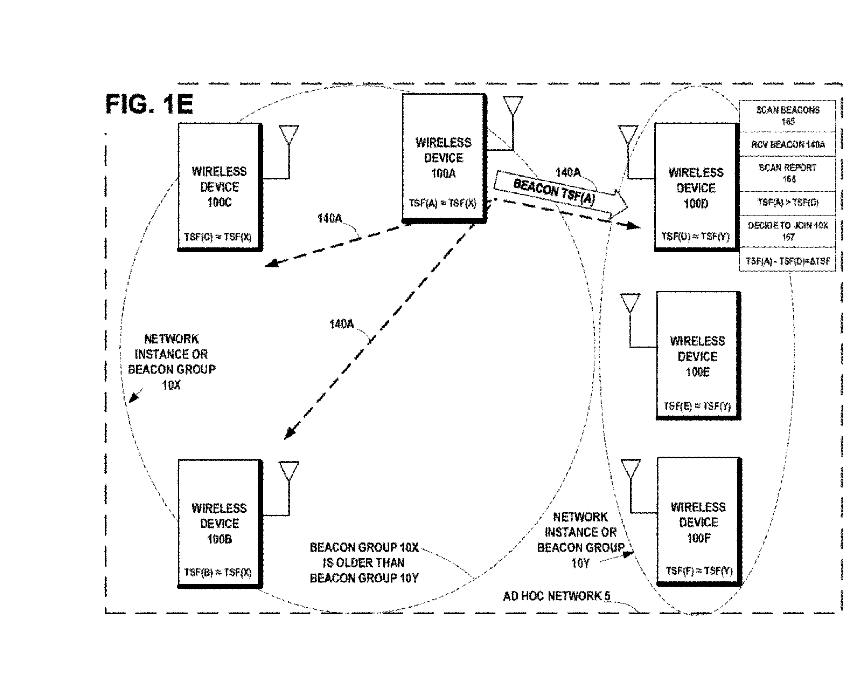

Figure 1E illustrates the example network diagram of Figure 1D, wherein wireless device 100D, a member of beacon group 10Y, scans for beacons. The wireless device 100A in the older beacon group 10X transmits a beacon 140A that is received by wireless devices 100B, 100C, and 100D. The LLC of the device 100D compares timing synchronization function TSF(D) of device 100D, which approximates the TSF(Y) of the younger beacon group 10Y, with the value of TSF(A) in the received beacon 140A, which approximates the TSF(X) of the older beacon group 10X. The LLC decides to join the older beacon group 10X. The LLC computes the absolute difference of the TSF values TSF(A) - TSF(D)=$\Delta$TSF. In accordance with an example embodiment of the invention, the absolute difference of the TSF values $\Delta$TSF is buffered in device 100D. The buffered value of $\Delta$TSF may be used to accurately identify later received beacons from devices that are members of the beacon group 10X, in accordance with at least one embodiment of the present invention. The device 100D waits to join the beacon group 10X until the next beacon is received from a device in that beacon group, in accordance with at least one embodiment of the present invention.

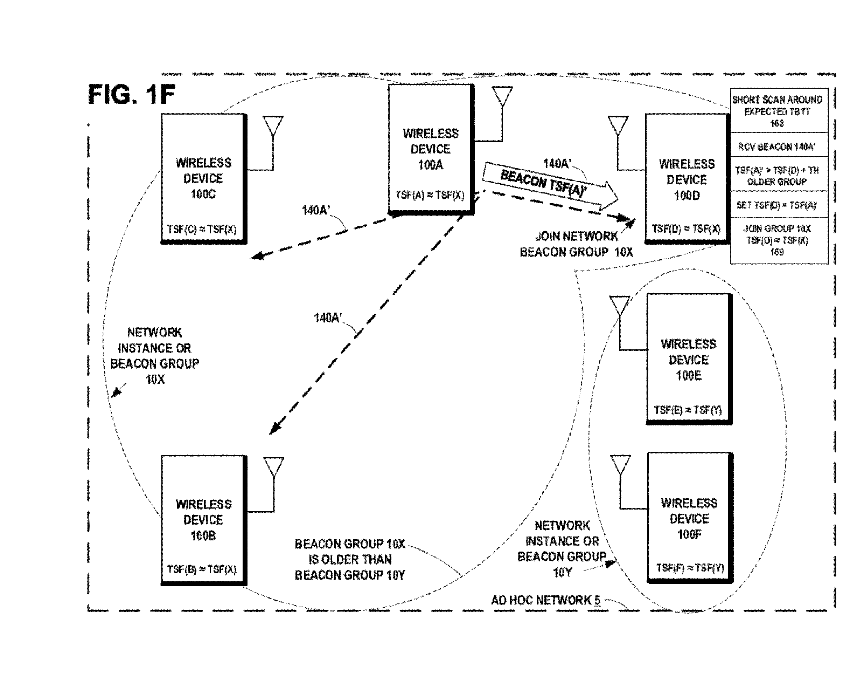

Figure 1F illustrates the example network diagram of Figure 1E, wherein wireless device 100D, still a member of beacon group 10Y, scans for beacons. In accordance with an example embodiment of the invention, since device 100D is waiting to join the beacon group 10X until the next beacon is received from a device in that beacon group, device 100D scans within a short time period around the expected time of the TBTT for beacon group 10X. Using a short scan time period saves power because the receiver does not need to be on the whole beacon period. In addition using a short scan time period around the expected TBTT increases the possibility that it is the wanted beacon group that a device joins to. The wireless device 100A in the older beacon group 10X transmits a second beacon 140A' that is received by wireless devices 100B, 100C, and 100D. The MAC in the device 100D uses the normal WLAN mechanisms to scan and join the beacon group 10X. The MAC sets the TSF value TSF(D) of the device 100D equal to TSF(A)', thereby causing device 100D to join the beacon group 10X. Wireless device 100D now has a TSF value of TSF(A)' that is approximately equal to the value TSF(X) attributed to whole beacon group 10X, in accordance with at least one embodiment of the present invention.

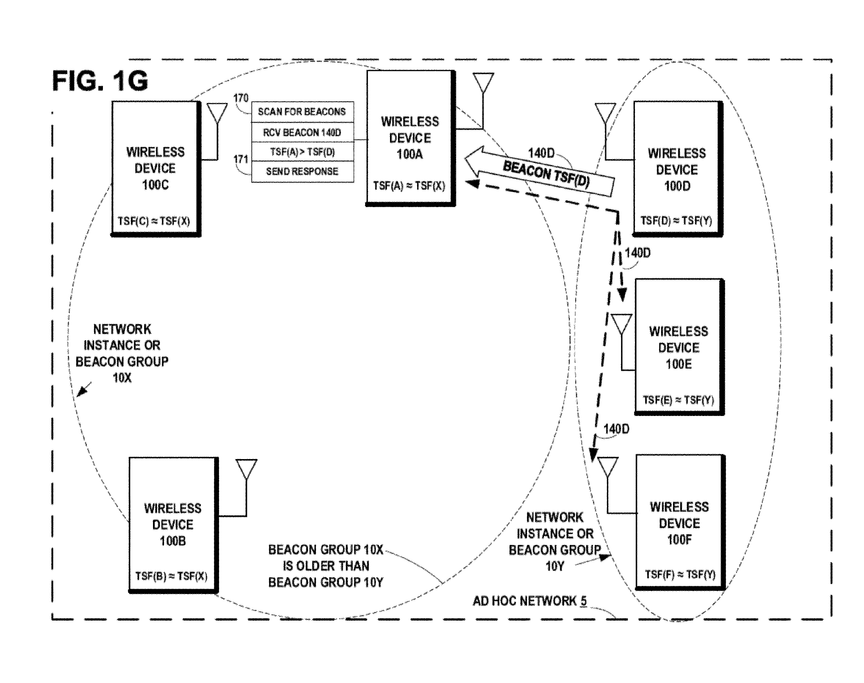

Figure 1G illustrates the example network diagram of Figure 1E, wherein device 100A in the older beacon group 10X scans for other network instances and device 100D in the younger beacon group 10Y performs normal beaconing. Devices 100E, 100F and 100A receive the beacon 140D from device 100D. The timing synchronization function TSF(A) of device 100A, which approximates the TSF(X) of the older beacon group 10X, is compared with the value of TSF(D) in the received beacon 140D, which approximates the TSF(Y) of the younger beacon group 10Y. The MAC of device 100A decides to transmit a response message 144A containing TSF(A) to device 100D to inform the younger beacon group 10Y about the older beacon group 10X, in accordance with at least one embodiment of the present invention, in accordance with at least one embodiment of the present invention.

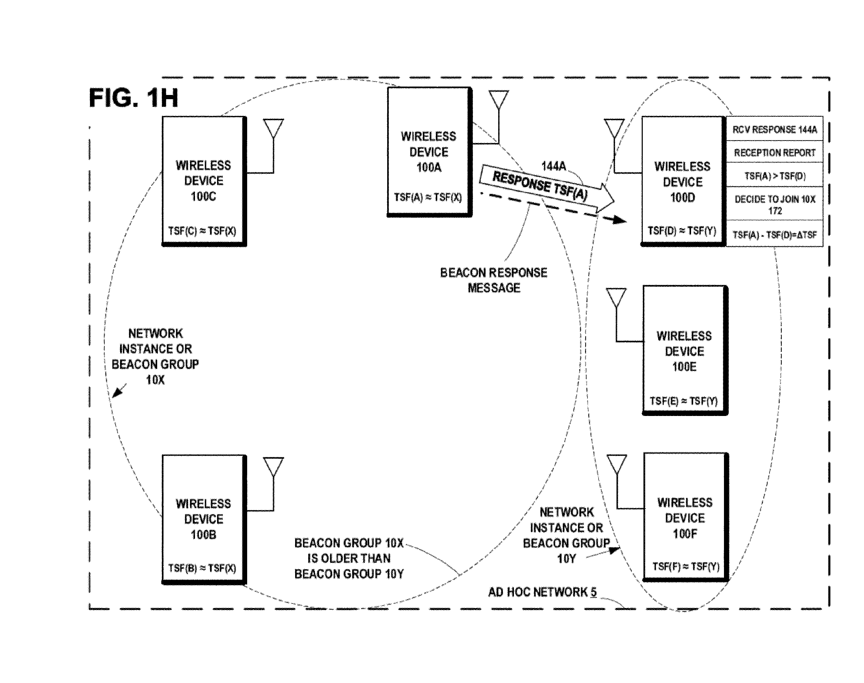

Figure 1H illustrates the example network diagram of Figure 1G, wherein the wireless device 100D receives the beacon response message 144A from the wireless device 100A in the beacon group 10X. The beacon response message 144A includes the sender's TSF value TSF(A) and the beacon period of the sender's beacon group 10X. In accordance with an example embodiment of the invention, the LLC decides the device 100D will join the beacon group 10X without waiting for receipt of a later beacon from Group 10X. In accordance with an example embodiment of the invention, the absolute difference of the TSF values TSF(A) - TSF(D)=$\Delta$TSF is buffered in device 100D. The buffered value of $\Delta$TSF may be used to accurately identify later received beacons from devices that are members of the beacon group 10X.

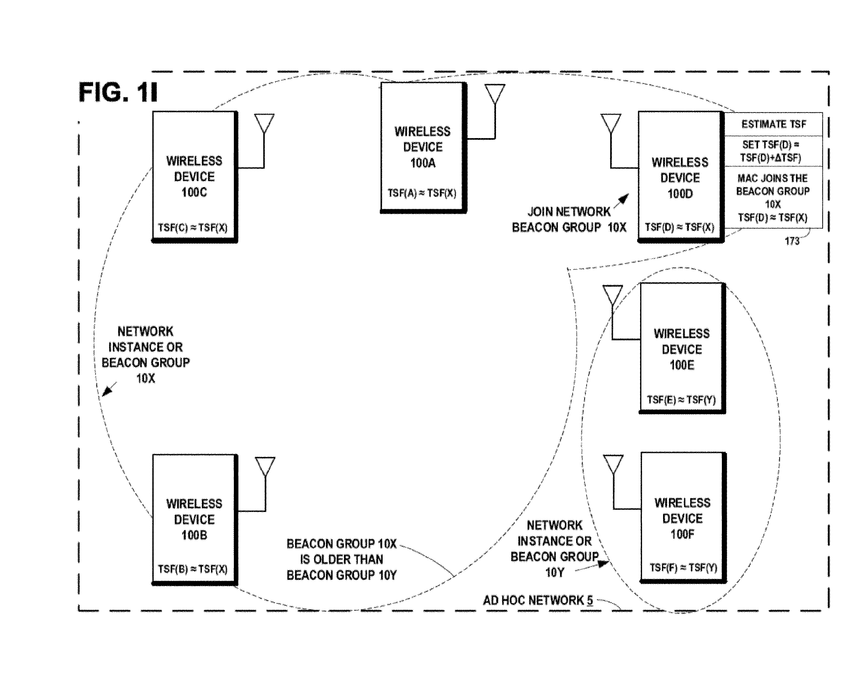

Figure 1I illustrates the example network diagram of Figure 1H, wherein the LLC of the wireless device 100D has decided to estimate the TSF value without waiting for receipt of a later beacon from Group 10X. The LLC calculates $\Delta$TSF + TSF(D) as the new value of TSF for device 100D to join beacon group 10X. The LLC passes the new TSF value to the MAC to perform the TSF adjustment to join group 10X. The MAC calculates the next TBTT time based on the new TSF value, just as the MAC would do if it were to receive the new TSF value in a beacon from a device that is a member of the older beacon group. Device 100D has now joined the beacon group 10X, in accordance with at least one embodiment of the present invention.

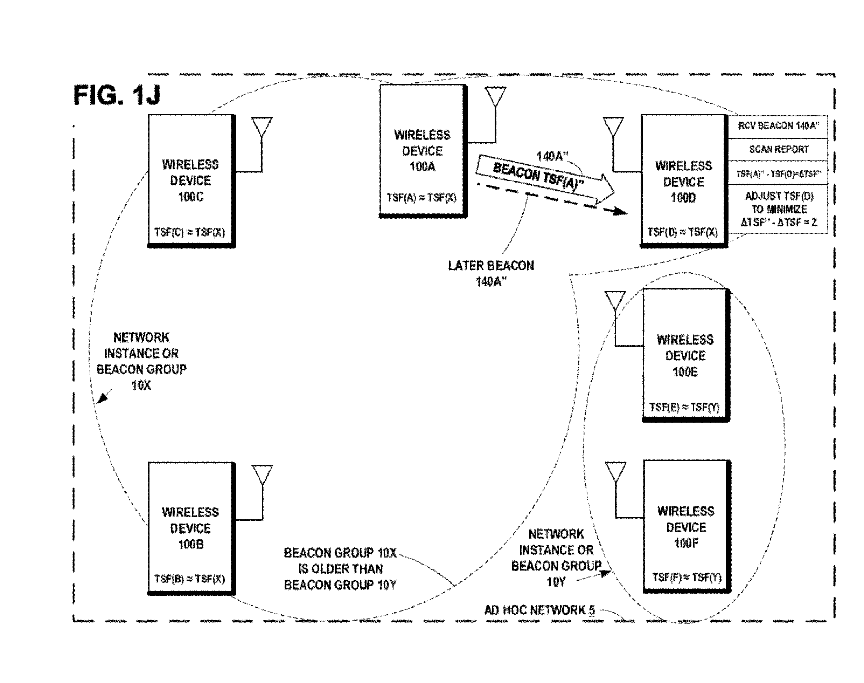

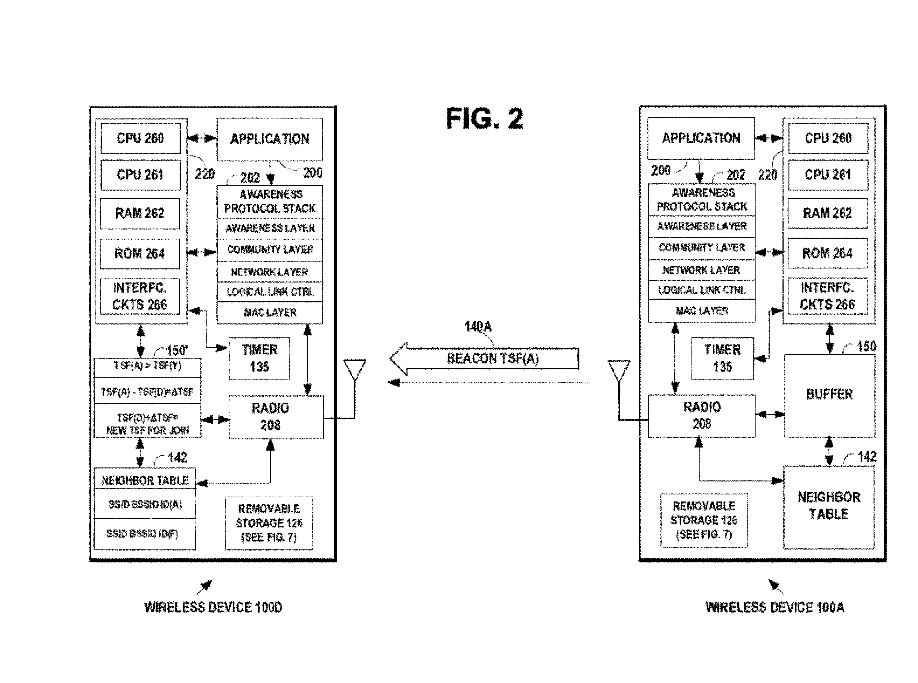

Figure 1J illustrates the example network diagram of Figure 1I, wherein a later beacon is received by device 100D. Device 100D adjusts its TSF(D) value based on the value of TSF(A)" in the received beacon. The device 100D calculates TSF(A)" - TSF(D) = $\Delta$TSF" and adjusts TSF(D) to minimize $\Delta$TSF" - $\Delta$TSF = Z, in accordance with at least one embodiment of the present invention. Figure 2 is an example functional block diagram of the wireless devices 100A and 100D, showing the transmission of the beacon from device 100A to device 100D, in accordance with at least one embodiment of the present invention.

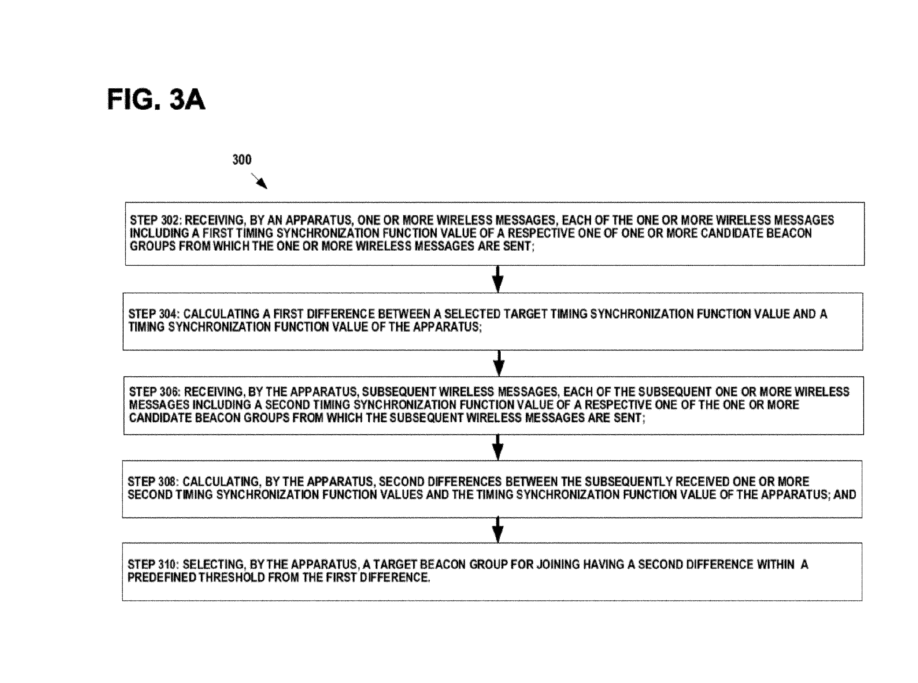

Figure 3A is an example flow diagram of operational steps in the wireless device 100D of Figure 1A, in accordance with at least one embodiment of the present invention.

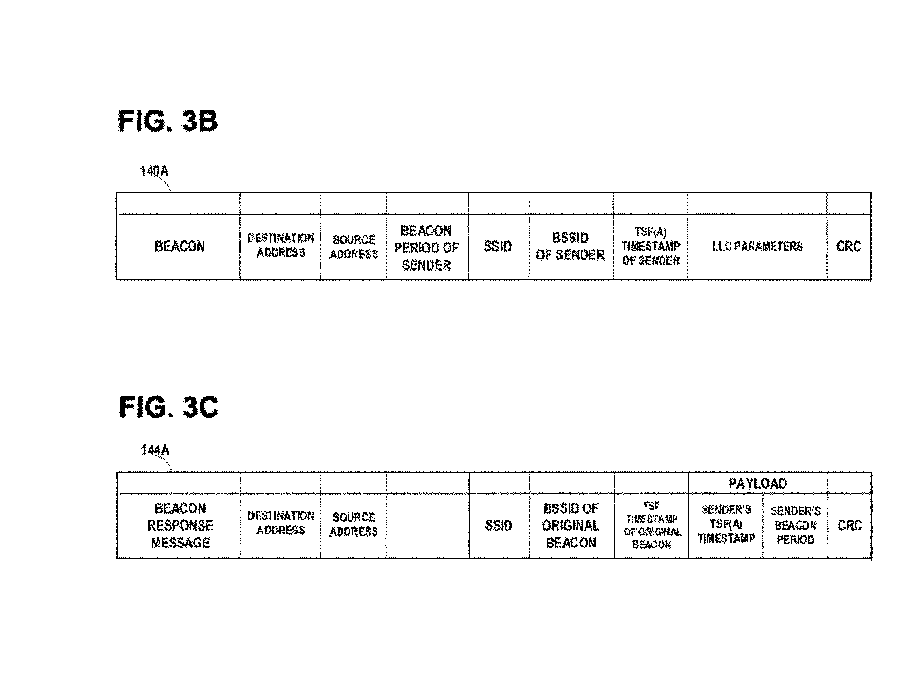

Figure 3B shows an example format of a beacon packet transmitted by wireless device 100A that includes the value of the device's TSF timer at the time that the beacon is transmitted, in accordance with at least one embodiment of the present invention.

Figure 3C shows an example format of a beacon response message packet transmitted by a wireless device that includes the value of the device's TSF timer and the beacon period at the time that the beacon response message is transmitted, in accordance with at least one embodiment of the present invention.

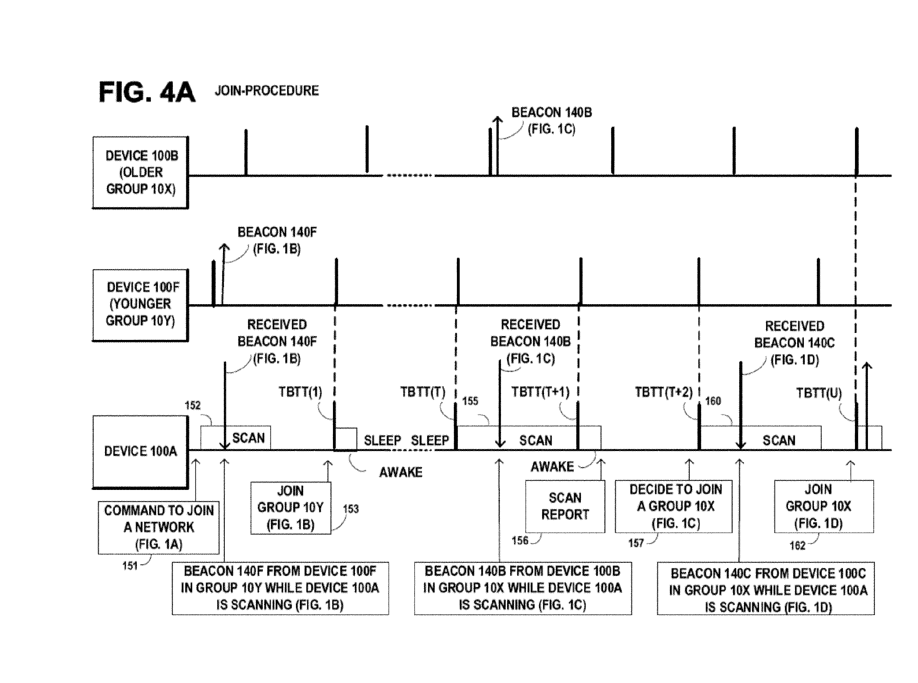

Figure 4A illustrates an example timing diagram of a Join-procedure, as shown in Figures 1A, 1B, 1C, and 1D, in accordance with at least one embodiment of the present invention.

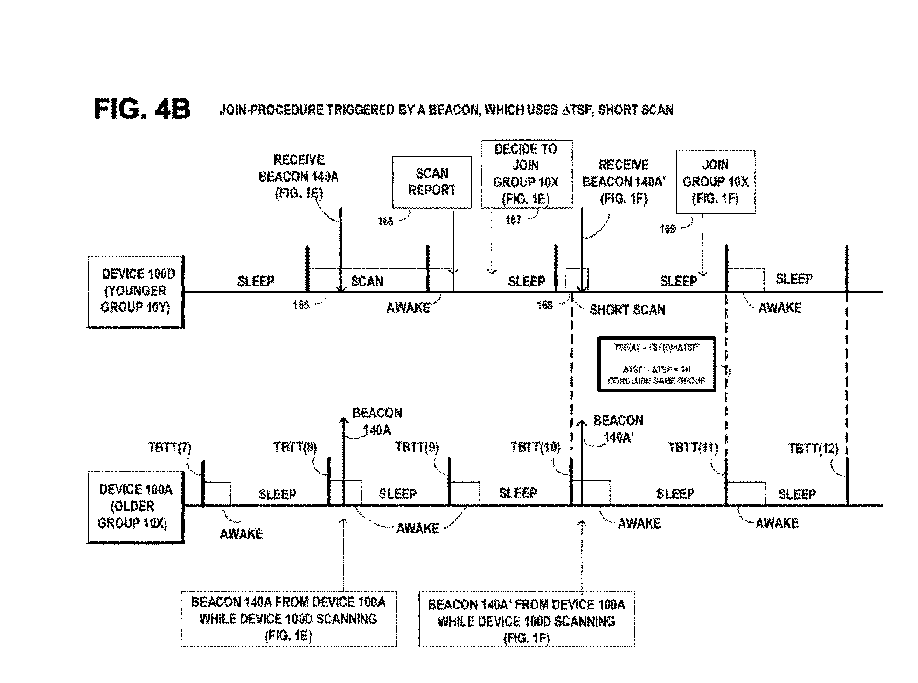

Figure 4B illustrates an example timing diagram of a Join-procedure triggered by a beacon, which uses $\Delta$TSF and a short scan, as shown in Figures 1E and 1F, in accordance with at least one embodiment of the present invention.

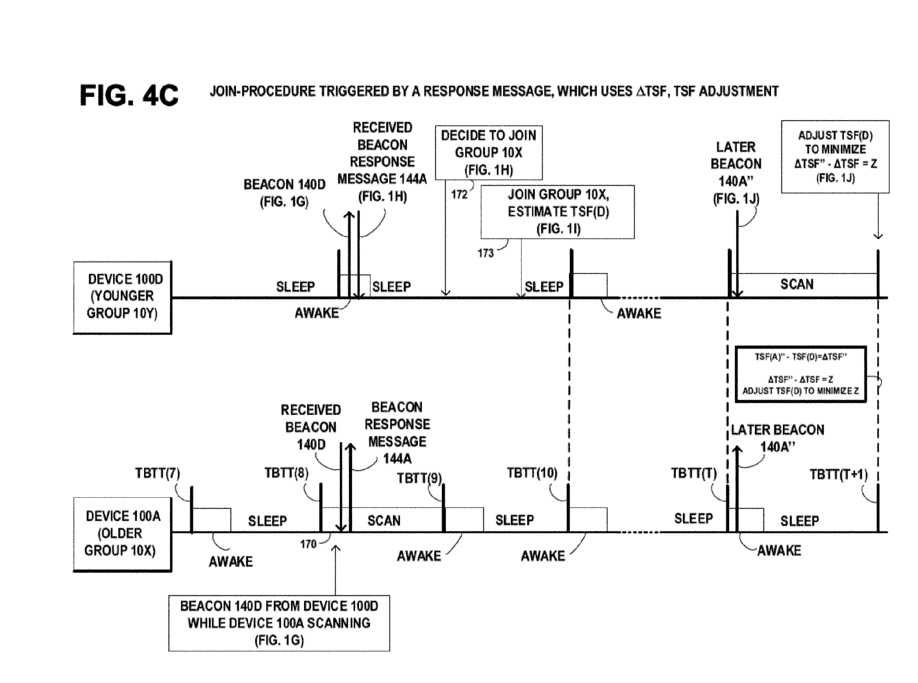

Figure 4C illustrates an example timing diagram of a Join-procedure triggered by a beacon response message, which uses $\Delta$TSF and TSF adjustment, as shown in Figures 1G, 1H, and , and 1J, in accordance with at least one embodiment of the present invention.

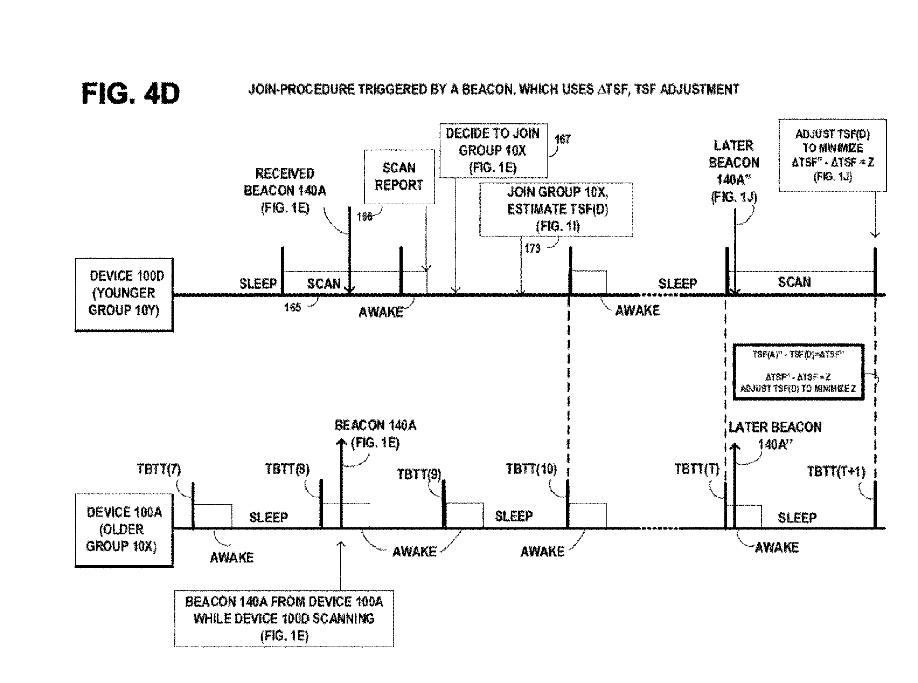

Figure 4D illustrates an example timing diagram of a Join-procedure triggered by a beacon, which uses $\Delta$TSF and TSF adjustment, as shown in Figures 1E, 1I, and 1J, in accordance with at least one embodiment of the present invention.

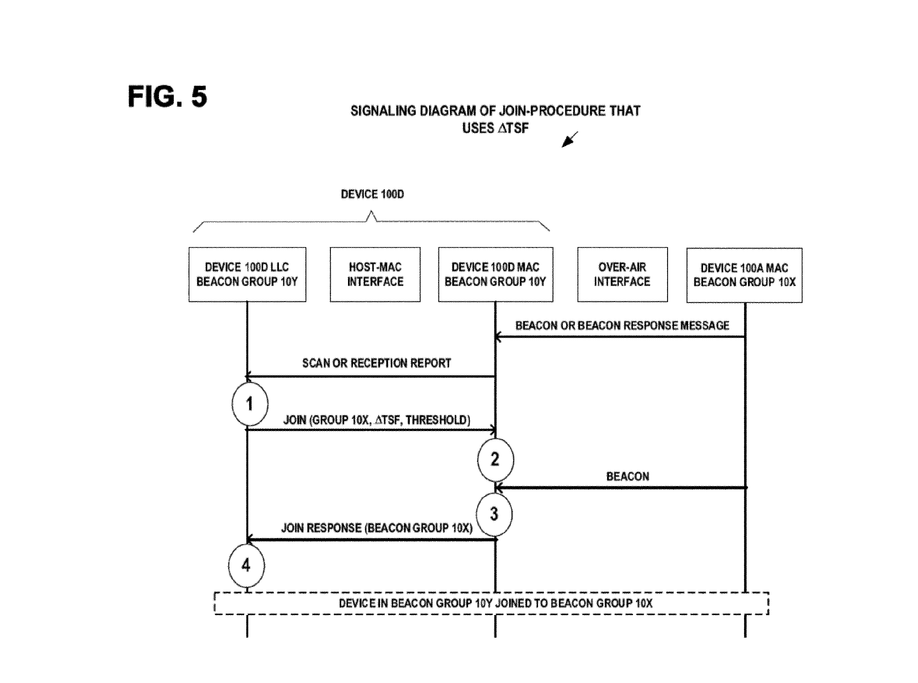

Figure 5 illustrates an example signaling diagram of the Join-procedure that uses $\Delta$TSF, in accordance with at least one embodiment of the present invention.

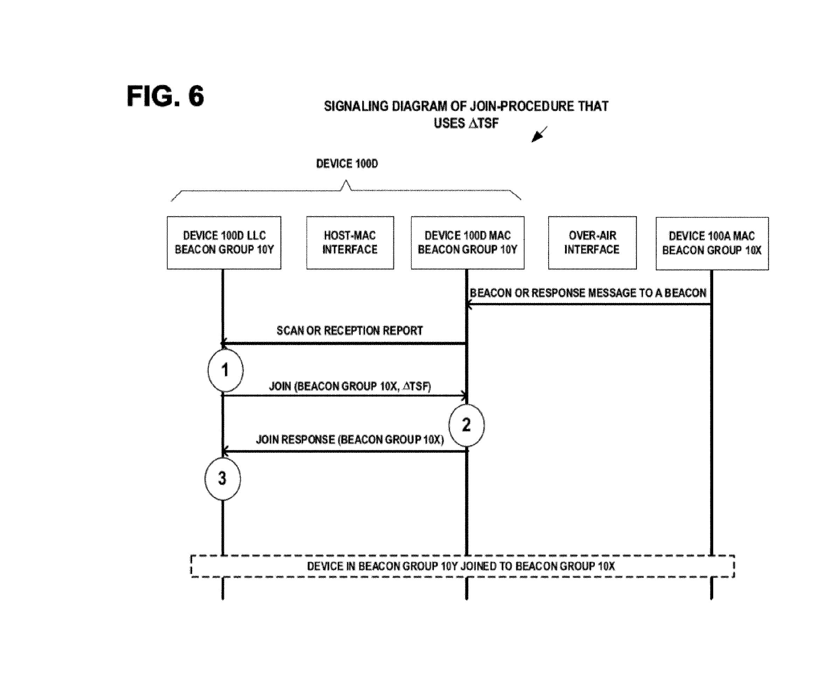

Figure 6 illustrates an example signaling diagram of the Join-procedure without waiting for a Beacon, in accordance with at least one embodiment of the present invention.

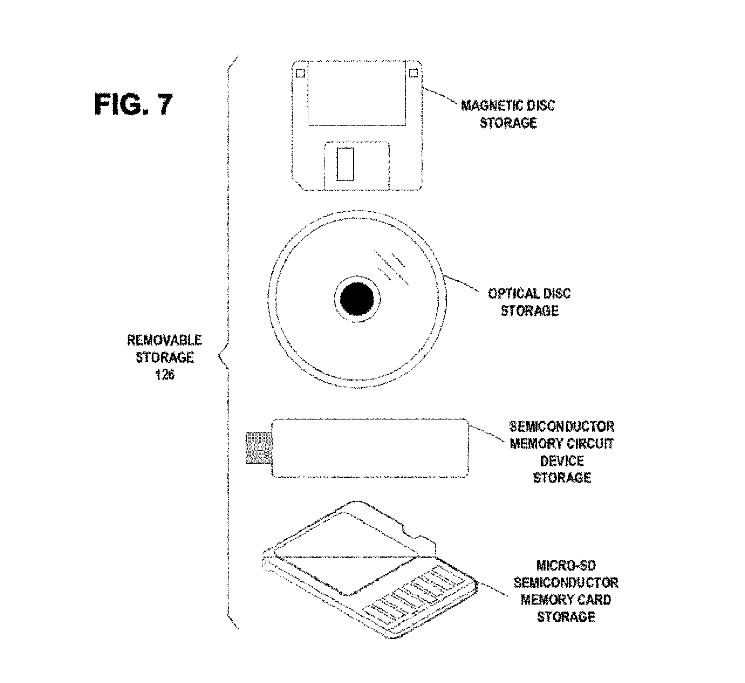

Figure 7 illustrates an example embodiment of the invention, wherein examples of removable storage media are shown, based on magnetic, electronic and/or optical technologies, such as magnetic disks, optical disks, semiconductor memory circuit devices and micro-SD memory cards (SD refers to the Secure Digital standard) for storing data and/or computer program code as an example computer program product, in accordance with an example embodiment of the invention.

## DISCUSSION OF EXAMPLE EMBODIMENTS OF THE INVENTION:

This section is organized into the following topics:

A. WLAN Communication Technology

B. Awareness Network Technology

C. Exchanging of information between wireless devices for joining

## A. WLAN Communication Technology

The IEEE 802.11 standard specifies methods and techniques of an exemplary wireless local area network (WLAN) operation. Examples include the IEEE 802.11b and 802.11g wireless local area network specifications, which have been a staple technology for traditional WLAN applications in the 2.4 GHz ISM band. The various amendments to the IEEE 802.11 standard were consolidated for IEEE 802.11a, b, d, e, g, h, i, j, k, n, r, s, u, v, and z protocols, into the base standard IEEE 802.11-2012, Wireless Medium Access Control (MAC) and Physical Layer (PHY) Specifications, February 2012. Since then, emerging broadband applications have stimulated interest in developing very high-speed wireless networks for short range communication, for example, the IEEE 802.11n, the planned IEEE 802.11ac, and the planned IEEE 802.11ad WLAN specifications that are to provide a very high throughput in higher frequency bands. Applications of these IEEE 802.11 standards include products such as consumer electronics, telephones, personal computers, and access points for both for home and office.

A WLAN may be organized as an independent basic service set (IBSS) or an infrastructure basic service set (BSS). Wireless devices or stations (STAs) in an independent basic service set (IBSS) communicate directly with one another and there is no access point in the IBSS. WLAN ad hoc networks have an independent configuration where the mobile devices communicate directly with one another, without support from a fixed access point. WLAN ad hoc networks support distributed activities similar those of the Bluetooth™ piconets. The IEEE 802.11 standard provides wireless devices with service inquiry features similar to the Bluetooth™ inquiry and scanning features.

The independent basic service set (IBSS) has a BSS Identifier (BSSID) that is a unique identifier for the particular ad hoc network. Its format is identical to that of an IEEE 48-bit address. In an ad hoc network, the BSSID is a locally administered, individual address that is generated randomly by the device that starts the ad hoc network.

Synchronization is the process of the devices in an ad hoc network getting in step with each other, so that reliable communication is possible. The MAC provides the synchronization mechanism to allow support of physical layers that make use of frequency hopping or other time-based mechanisms where the parameters of the physical layer change with time. The process involves beaconing to announce the presence of an ad hoc network, and inquiring to find an ad hoc network. Once an ad hoc network is found, a device joins the ad hoc network. This process is entirely distributed in ad hoc networks, and relies on a common time base provided by a timing synchronization function (TSF). The TSF may maintain a 64-bit timer running at 1 MHz and updated by information from other devices. When a device begins operation, it may reset the timer to zero. The timer may be updated by information received in beacon frames.

Each wireless device or STA maintains a TSF timer with modulus $2^{64}$ counting in increments of microseconds. STAs expect to receive Beacon frames at a nominal rate. The interval between Beacon frames is defined by a Beacon Period parameter of the STA. A STA sending a Beacon frame sets the value of the Beacon frame's timestamp so that it equals the value of the STA's TSF timer at the time that the data symbol containing the first bit of the timestamp is transmitted to the PHY plus the transmitting STA's delays through its local PHY from the MAC-PHY interface to its interface with the antenna or light-emitting diode (LED) emission surface.

In an ad hoc network, since there is no access point (AP) to act as the central time source for the ad hoc network, the timer synchronization mechanism is completely distributed among the mobile devices of the ad hoc network. Since there is no AP, the mobile device that starts the ad hoc network will begin by resetting its TSF timer to zero and transmitting a Beacon, choosing a beacon period. This establishes the basic beaconing process for this ad hoc network. After the ad hoc network has been established, each device in the ad hoc network will attempt to send a Beacon after the target beacon transmission time (TBTT) arrives. To minimize actual collisions of the transmitted Beacon frames on the medium, each device in the ad hoc network may choose a random delay value which it may allow to expire before it attempts its beacon transmission.

Once a device has performed an inquiry that results in one or more ad hoc network descriptions, the device may choose to join one of the ad hoc networks. The joining process is a purely local process that occurs entirely internal to the mobile device. There is no indication to the outside world that a device has joined a particular ad hoc network. Joining an ad hoc network may require that all of the mobile device's MAC and physical parameters be synchronized with the desired ad hoc network. To do this, the device may update its timer with the value of the timer from the ad hoc network description, modified by adding the time elapsed since the description was acquired. This will synchronize the timer to the ad hoc network. The BSSID of the ad hoc network may be adopted, as well as the parameters in the capability information field. Once this process is complete, the mobile device has joined the ad hoc network and is ready to begin communicating with the devices in the ad hoc network.

There are three major types of medium access control (MAC) frames in the IEEE 802.11 protocol: the management frame, the control frame, and the data frame. Management frames provide management services. Data frames carry payload data. Control frames assist in the delivery of data and management frames. Each of these types of MAC frame consists of a MAC header, a frame body, and a frame check sequence (FCS). The header contains control information used for defining the type of 802.11 MAC frame and providing information necessary to process the MAC frame. The frame body contains the data or information included in either management type or data type frames. The frame check sequence is a value representing a cyclic redundancy check (CRC) over all the fields of the MAC header and the frame body field.

## 1. Beacon

The beacon frame is a management frame that is transmitted periodically to allow mobile devices to locate and identify an ad hoc network. Beacon generation in an IBSS is distributed. The value of the beacon period is included in Beacon and Probe Response frames, and devices or STAs adopt that beacon period when joining the IBSS. All members of the IBSS participate in beacon generation. Each STA maintains its own TSF timer that is used for Beacon Period timing. The beacon interval within an IBSS is established by the STA when the START request primitive is performed within a device to create the IBSS. This defines a series of target beacon transmission times (TBTT) exactly a Beacon Period apart, which is the time at which an ad hoc device must send a beacon. Time zero is defined to be a TBTT. At each TBTT the STA waits for the random backoff interval and then sends a Beacon frame if the random delay has expired and no other Beacon frame has arrived from the IBSS of which the STA is a member during the delay period.

The beacon frame includes the fields: timestamp, beacon interval, and capability information. The timestamp contains the value of the device's synchronization timer (TSF) at the time that the frame was transmitted. The capability information field is a 16-bit field that identifies the capabilities of the device. The information elements in a beacon frame are the service set identifier (SSID), the supported rates, one or more physical parameter sets, an optional contention-free parameter set, an optional ad hoc network parameter set, and an optional traffic indication map. There is no restriction on the format or content of the 32 byte SSID.

The first ad hoc device to become active establishes an IBSS and starts sending beacons that to maintain synchronization among the devices. Other ad hoc devices may join the network after receiving a beacon and accepting the IBSS parameters, such as the beacon interval, found in the beacon frame.

Each device that joins the ad hoc network may send a beacon periodically if it doesn't hear a beacon from another device within a short random delay period after the beacon is supposed to be sent. If a device doesn't hear a beacon within the random delay period, then the device assumes that no other devices are active and a beacon needs to be sent. A beacon signal is periodically transmitted from the ad hoc network. The beacon frame is transmitted periodically and includes the address of the sending device.

## 2. Probe Request

The probe request frame is a management frame that is transmitted by a mobile device attempting to quickly locate a wireless LAN. It may be used to locate a wireless LAN with a particular SSID or to locate any wireless LAN. The probe request frame may contain the service attribute request. The effect of receiving a probe request is to cause the device to respond with a probe response. When a wireless device arrives within the communication range of any member of an ad hoc network, its probe request frame inquiry signals are answered by a member of the ad hoc network detecting the inquiry. A device in an ad hoc network responds to the probe request frame inquiry signals with a probe response containing the address of the responding device. The probe response frame also includes the timestamp, beacon interval, capability information, information elements of the SSID, supported rates, one or more physical parameter sets, the optional contention-free parameter set, and the optional ad hoc network parameter set.

For active scans, the WLAN radio may broadcast a probe request on the channel it is scanning using a broadcast SSID in the probe request. The WLAN radio will add any received beacons or probe responses to a cached basic service set identifier (BSSID) scan list. For passive scans, the WLAN radio does not send a probe request, but instead, listens on a channel for a period of time and adds any received beacons or probe responses to its cached BSSID scan list. The WLAN radio may scan both infrastructure and ad hoc networks, regardless of the current setting of its network mode. The WLAN radio may use either the active or passive scanning methods, or a combination of both scanning methods. When performing an active scan, the WLAN radio sets the BSSID to the broadcast MAC address in the probe request it sends. The WLAN radio performs the scan across all the frequency channels and bands that it supports.

## 3. Probe Response

Devices or STAs in an IBSS respond to probe requests if it is awake at a given time to receive and respond to the probe requests. In an IBSS, a STA that sent a Beacon frame remains in the Awake state and responds to probe requests, until a Beacon frame with the current BSSID is received. There may be more than one STA in an IBSS that responds to any given probe request, particularly in cases where more than one STA transmitted a Beacon frame following the most recent TBTT, either due to not receiving successfully a previous Beacon frame or due to collisions between beacon transmissions. In an IBSS, STAs receiving Probe Request frames respond with a probe response when the SSID in the probe request is the wildcard SSID or matches the specific SSID of the STA. In an IBSS a STA that transmitted a Beacon frame since the last TBTT responds to group addressed Probe Request frames. A STA in an IBSS responds to Probe Request frames sent to the individual address of the STA. Probe Response frames are sent as directed frames to the address of the STA that generated the probe request.

## B. Awareness Network Technology

Applications for short-range wireless devices are evolving to include awareness applications providing the device with an awareness about the local network environment. A non-limiting example awareness network architecture is the Nokia AwareNet framework, a network of wireless mobile devices self-organizing to support various applications, ranging from social networking to service discovery. Awareness information may be shared by a short-range wireless device sending an anonymous flooding message that may include a query, over an ad hoc network. A neighboring short-range wireless device may reply to the flooding message over the ad hoc network with a response, such as a pointer to a discovered location-based service.

Awareness information may include any information and/or context about a local network environment as well as the users and communication devices within the local network environment. Wireless devices may continuously collect and exchange information with other devices in a local network environment. Awareness applications running on short-range wireless devices may create a network for sharing awareness information, locate and organize awareness information, form communities for sharing awareness information, manage power consumption for devices engaged in sharing awareness information, develop applications to take advantage of the awareness information, and maintain the privacy and anonymity of users sharing awareness information.

Awareness applications running on short-range wireless devices, build upon the IEEE 802.11 ad hoc mode or independent basic service set (IBSS), in which every device participates in beaconing and all the other basic operations that keep the ad hoc network in operation. An ad hoc network is designed to have one service set identifier (SSID) that all of the devices in the network share. The SSID is announced in the beacons transmitted by the devices. The basic service set identifier (BSSID) is intended to represent a beacon group of devices or network instance, rather than the whole network itself. The devices announce the BSSID they use and follow, in the beacons they transmit. In the overall design, those devices that operate under same SSID are driven to use a common and shared BSSID, since the BSSID of a wireless device in an ad hoc network becomes the BSSID of the oldest network instance value in the network. The determination of which BSSID is used by a device is made by the network instance timer value, and this timer value is communicated in beacons in the timing synchronization function (TSF) value parameter. The devices are required to operate by assuming the oldest TSF value (i.e. largest TSF value) contained in the received beacons that represent the network with the SSID in which the devices are operating. When a device receives a beacon with an SSID that is the same as that in the network in which the device is operating, and if the TSF value in the beacon is larger than the device's own TSF counter value, then one of two alternative steps takes place. If the BSSID in the beacon is the same as the device's own BSSID, then the MAC adopts the TSF value (normal synchronization). Alternately, if the BSSID in the beacon is the not the same as the device's own BSSID, then the MAC passes the beacon to the LLC. The LLC then decides to join to the beacon group and passes the BSSID and the ΔTSF to the MAC.

When the radio and MAC of a wireless device transmits a Beacon, the Beacon MAC-header contains device's own current TSF value. The device may automatically transmit a reply message when it receives a Beacon from another network, the reply message being referred herein as a beacon response message. The beacon response message contains the current TSF value of the replying network.

When the radio and MAC of a wireless device receives a Beacon from another network instance during scanning, it passes to the Logical Link Control (LLC) layer of the wireless device: 1) its own TSF counter value at the time when the Beacon was received, and 2) the TSF value of the received Beacon (the other TSF). When the radio and MAC of a wireless device receives a beacon response message, the MAC passes to the Logical Link Control (LLC) layer of the wireless device, the beacon response message (including the other TSF) together with receiver's own TSF counter value at the time when the message was received.

Wireless devices form a network where all devices in proximity may communicate with each other. When two or more groups of devices forming two or more instances of the network come close to each other, the two or more instances may merge to become one network instance. Devices may make a merging or join decision to change the instance autonomously based on the TSF information collected from Beacons received during scan periods or based on the TSF information collected from received beacon response messages. A merging decision is performed when a device receives a Beacon or beacon response message with an older (greater) TSF value from another wireless device. Two devices belong to different network instances 1) if their BSSIDs (network instance identifiers) are different; or 2) if their BSSIDs are the same and their TSF difference is greater than a fixed constant threshold value (for example 1000μs). After the merging decision has been performed by a device, the device moves into the new network instance.

The awareness functionality in a short-range wireless device is divided between four layers in the awareness architecture. The Awareness Layer and the Community Layer provide services for applications, i.e. provide the awareness API. The approximate functional split between the different layers is as follows.

Awareness Layer

Awareness Layer (AwL) has the highest level of control of the awareness architecture. The most important services the AwL offers to the applications are Publish and Subscribe. The Awareness Layer receives publish and subscribe requests from applications and maps these into queries and query responses that, in turn, are mapped as awareness messages, the Network Layer PDU, that traverse from device to device. It also maps the awareness messages received by the device, to the application. The network layer does not appear as a data pipe for applications. A single awareness message is self-contained and short, the AwL compresses the messages in order for them to consume as little resources as possible.

The Awareness Layer has an internal storage of awareness data items. Publishing an item normally means storing it in this internal storage (passive publish). Such an item is visible to other devices in the local vicinity and may be found using the Subscribe service. It is also possible to use active publishing that causes the Awareness Layer to issue a publish message that propagates from device to device. It is the responsibility of the AwL to decide whether a received message leads to the notification of an application (filtering). Items may be marked to be visible to only certain communities, so that they are visible only to searches made by members of such a community.

The Subscribe request causes the Awareness Layer to issue either a single or repetitive query message(s) that eventually propagate to other devices in the local vicinity (by using the functionality of lower awareness layers). When such a query message reaches the AwL of a device that happens to possess a matching information item, it responds with a reply message. The lower layers of awareness architecture take care of the routing of such a message back to the AwL of the querying device, which notifies the application of the other device that issued the Subscribe request.

Community Layer

The concept of communities has been integrally built into awareness architecture. Awareness communication may be visible to all the devices, or just to those that belong to a certain community. Regardless of this visibility, all wireless devices take part in the routing of messages. The role of the Community Layer (CoL) is to implement the community visibility rules. Only those messages that a certain device has visibility to (i.e. a device belongs to the same community as the message) are passed to the AwL. As an additional level of community privacy, messages are encrypted by the Community Layer. To allow such message filtering and encryption/decryption, the CoL stores the community credentials for those communities to which the user of the device belongs. The default awareness community (all local users) does not use any credentials and therefore its messages simply pass through the Community Layer.

Awareness architecture has three different kinds of communities: the default awareness community, peer communities and personal communities. Communities may also be categorized with their privacy. Messages of public communities are transmitted as plain text whereas messages of private communities are transmitted encrypted. The default awareness community is the default community for all wireless devices. Awareness community messages are not encrypted and every node may send and can receive awareness community messages (public community). In a peer community all members are equal and every member may receive all the community specific messages. A peer community may be public, or it may be private meaning that community messages are encrypted using a temporary key derived from the community specific shared key. The encryption function is Advanced Encryption Standard, EAX mode (AES/EAX) with 128 bit keys. A personal community has a community owner that manages the community. A non-owner community member may communicate with the owner but not with other members of the community. A personal community is private, meaning that community messages from the owner to other members are encrypted.

Network Layer

The Network Layer (NL) takes care of the local dissemination of the awareness messages. This is accomplished by way of a smart-flooding algorithm that attempts to adapt to the surrounding device density. At high densities, very few devices participate in the transmission of a given message. At low densities, all the devices will retransmit each message (normal flooding). The awareness network has a flat hierarchy; none of the devices may assume any special roles. Thus, at high densities, all the devices will transmit approximately the same amount of traffic (no clustering). The Network layer also takes care of the routing of the replies back to the device that issued the search. To this end, it collects routing information from the messages that flow through it. It also keeps track of all the neighbors and their approximate distance. Normally, reply routing uses unicast transmissions, whereas flooding messages are always broadcasted. All the messages received by the Network Layer are passed to Community Layer in order to check whether the message should be processed in the AwL.

Link Layer

Link Layer performs the adaptation between the underlying radio technology (e.g. IEEE 802.11 WLAN physical layer) and the Network Layer. It maps the specific information of the radio technology, such as radio identifiers and received signal strengths, into technology neutral information used by the Network Layer (NL). Multiple Link Layer instances may be used by the NL, e.g. for simultaneous usage of different radio technologies.

The Link Layer is divided into two sub layers: logical link control (LLC) and media access control (MAC). LLC provides radio technology agnostic service for the Network Layer. It hides differences between radio technology specific MACs. LLC provides a single service access point for the Network layer. LLC knows how to map the generic provided service to the service provided by the technology specific MACs. The LLC internal data structures include the Neighbor Table that contains information of all the neighboring devices that have been heard in the recent past.

The Link Layer tries to transmit data via the given channel using the TransmitData functionality. Transmission may succeed or it may fail. Internally the Link Layer may try transmissions several times if a channel is temporarily busy. The Link Layer passes all the messages it receives to the Network Layer. This also includes unicast messages that are intended for other nodes.

The logical link control (LLC) is aware of radio technology specific MACs. In case of the IEEE 802.11 WLAN MAC, the LLC does the following WLAN MAC specific actions:

Control (Reset, Configure) WLAN MAC.
Decide when to merge WLAN networks.
Construct a message package to be sent to WLAN MAC from outgoing messages.
Select which messages are to be sent and which are ignored immediately, e.g. if there are too many messages to be sent.
Extract incoming data messages contained in reception reports.
Update the Neighbor Table when reception reports and scan reports are received.

Merging of WLAN networks is the responsibility of the logical link control (LLC). The LLC determines when to merge two WLAN network instances or beacon groups as a single larger network instance or a beacon group. LLC calculates an estimate of its own WLAN network size. Estimation is based on information provided by the Network Layer, information found in the LLC Neighbor Table and network size category shared by other nodes. A network size category is calculated from an estimated network size.

The IEEE 802.11 WLAN MAC awareness mode enables a wireless device to use its power efficiently. In the awareness mode, the WLAN radio is asleep most of the time, thus reducing power consumption. Messages are transmitted and received in a batch mode, i.e. LLC passes all the messages that the MAC is to transmit during a single awake period, in a single package. The MAC passes all the messages received during a single awake period in a single reception report. The LLC collects messages to be transmitted in a single package. When the MAC is awake, the LLC passes the package to the MAC and it tries to transmit the messages. When the MAC is about to go asleep, it sends a transmission report to the LLC containing information about messages it has succeeded to transmit and about messages it has failed to transmit. In addition MAC passes a reception report to LLC. The report contains messages received during the awake period.

The merging or joining process is a purely local process that occurs entirely internally to the wireless device. The Awareness Layer of the wireless device may make a merging or join decision to join a particular network instance or beacon group, either autonomously, in response to an application, or in response to user input. There is no indication to the outside world that a device has joined a particular ad hoc network. Joining an ad hoc network may require that all of the mobile device's MAC and physical parameters be synchronized with the desired ad hoc network. To do this, the device may update its timer with the TSF value of the timer from the ad hoc network description, modified by adding the time elapsed since the description was acquired. This will synchronize the device's timer to the ad hoc network. The BSSID of the ad hoc network may be adopted, as well as the parameters in the capability information field. Once this process is complete, the wireless device has joined the ad hoc network and is ready to begin communicating with the wireless devices in the ad hoc network.

The IEEE 802.11 WLAN MAC awareness mode provides the following functionalities:

Reset MAC.
Configure MAC.
Join a WLAN network or create a new network.
Join an existing WLAN network (BSSID is known).
Set a template for beacon frames so that LLC parameters can be passed in WLAN beacon frames.
Try to transmit a set of messages.
Receive a set of incoming messages.
Receive a set of WLAN scan messages

Message propagation

The propagation of an awareness search message is conducted in the awareness architecture layers of different devices. An application initiates a subscription in the device by using the Subscribe service offered by the Awareness Layer. The Awareness Layer realizes the subscription by sending a query message to other devices. In all the devices the message goes at least up to the Community Layer. However, only in those devices that belong to the community to which the message was intended, does the message proceed to the AwL. There is no need to have an application present in the replying device. It is sufficient to only have the awareness platform active.

Current awareness applications employ the standard IEEE 802.11 WLAN ad hoc Join-command to implement a move from one instance to another. In the standard IEEE 802.11 WLAN ad hoc Join- command, if all network instances share the same BSSID, then the standard Join- command does not provide means to control to which network instance, of several possible candidate network instances, a device is requested to move. In the standard IEEE 802.11 WLAN ad hoc Join- command, if all of the network instances have the same BSSID, the Beacons contain no distinctive network instance identifier and thus there is no means to control to which network instance the command is directed. Therefore, the standard IEEE 802.11 WLAN ad hoc Join-mechanism may make the device move its operations back to its original own network instance, or some other proximate network instance with the oldest TSF value.

**C. Exchanging of Information Between Wireless Devices for Joining**

As previously mentioned, the BSSID of a wireless device in an ad hoc network becomes the BSSID of the oldest network instance value in the network. Thus, the BSSID may not be a reliable basis for identifying beacons or beacon response messages received from a particular targeted network instance. An example embodiment of the invention distinguishes the beacon or beacon response message received from the particular targeted network instance to be joined, from those of all other possible candidate network instances.

In an example embodiment of the invention, an absolute difference is computed between the wireless device's own TSF counter value and the received candidate TSF counter value representing the particular targeted network instance to be joined. The absolute difference is referred to herein as $\Delta$TSF. The value of $\Delta$TSF may be used to accurately identify which network instance or beacon group, of several possible candidate network instances, is the correct one to join.

In an example embodiment of the invention, the wireless device that is the merging decision maker, calculates the $\Delta$TSF for the network instance to which it desires the device's MAC to move operations. This $\Delta$TSF is communicated by the logical link control (LLC) to the own device's MAC as the key parameter of the join command (or similar command). The MAC then moves the operations of the device to be compatible with the operations of the other network instance and the device will begin transmitting its own beacons with the new TSF value (it's prior own TSF counter value + $\Delta$TSF).

In an example embodiment of the invention, an alternative to the TSF value is an "awake-period-number". An awake-period-number is obtained as follows:

$$\text{Awake\_period\_number} = \text{floor (TSF / beacon\_period\_length)}.$$

The floor function of (TSF / beacon_period_length).generates the largest integer not greater than (TSF / beacon_ period_length). An awake-period-number may be used whenever a TSF value is mentioned in the following discussion.

Figure 1A illustrates an example network diagram of an ad hoc network 5 including two ad hoc network instances, one an older beacon group 10X and the other a younger beacon group 10Y. A beacon group is defined as the set of devices from which a device receives beacons and that have the same target beacon transmission time (TBTT) as the receiving device. Beacon group 10X includes wireless devices 100B and 100C. Wireless device 100B has a TSF value of TSF(B) that is approximately equal to the value attributed to whole beacon group 10X of TSF(X). The value of TSF (B) is included in the beacon transmitted by wireless device 100B. Wireless device 100C has a TSF value of TSF(C) that is approximately equal to the value attributed to whole beacon group 10X of TSF(X). The value of TSF(C) is included in the beacon transmitted by wireless device 100C. In the ad hoc network instance beacon group 10X, both wireless devices 100B and 100C participate in beacon generation, each maintains its own TSF timer that is used for Beacon Period timing. The beacon interval within the beacon group 10X is established by the device when the device initially creates the beacon group network instance, which defines a series of TBTTs exactly a Beacon Period apart. At each TBTT, each wireless device 100B and 100C waits for the random backoff interval and then sends a Beacon frame if the random delay has expired and no other Beacon frame has arrived from the beacon group 10X during the delay period.

Beacon group 10Y includes wireless devices 100D, 100E, and 100F. Wireless device 100D has a TSF value of TSF(D) that is approximately equal to the value attributed to whole beacon group 10Y of TSF(Y). The value of TSF (D) is included in the beacon transmitted by wireless device 100D. Wireless device 100E has a TSF value of TSF(E) that is approximately equal to the value attributed to whole beacon group 10Y of TSF(Y). The value of TSF(E) is included in the beacon transmitted by wireless device 100E. Wireless device 100F has a TSF value of TSF(F) that is approximately equal to the value attributed to whole beacon group 10Y of TSF(Y). The value of TSF(F) is included in the beacon transmitted by wireless device 100F. In the ad hoc network instance or beacon group 10Y, the three wireless devices 100D, 100E, and 100F participate in beacon generation, each maintains its own TSF timer that is used for Beacon Period timing. The beacon interval within the beacon group 10Y is established by a device when the device initially creates the beacon group network instance, which defines a series of TBTTs exactly a Beacon Period apart. At each TBTT each wireless device 100D, 100E, and 100F waits for the random backoff interval and then sends a Beacon frame if the random delay has expired and no other Beacon frame has arrived from the beacon group 10Y during the delay period.

The awake times of beacon group 10X and beacon group 10Y are such that they are not necessarily synchronized in time. The wireless devices within a beacon group synchronize by establishing a common time base provided by the timing synchronization function maintained in each device. The beacon frames that each device sends include the value of the device's TSF timer at the time that the beacon is transmitted. When a device receives a beacon from within its the beacon group, if the TSF value in the beacon is larger than the device's own TSF counter value, then the device adopts the TSF value communicated in the beacon.

An application in wireless device 100A commands the device to join to a network and the device begins scanning for beacons, as depicted in 151 and 152, in accordance with at least one embodiment of the present invention. The user's wireless device 100A begins its operation to join a beacon group by collecting TSF information from Beacons received during passive scanning periods. The user's wireless device 100A listens on a channel for a period of time and adds any received beacons to its cached BSSID scan list.

Figure 1B illustrates the example network diagram, of Figure 1A. Wireless device 100A that is not a member of any beacon group, scans for beacons for a first time join. A first time join is done completely in the MAC and PHY layers, and is done according to normal IEEE 802.11 WLAN operations. The MAC joins any network instance with a matching SSID and any BSSID. If no network instance is detected, then the MAC creates a new network instance with a new BSSID. After joining, the MAC returns the new BSSID value to the LLC. The wireless device 100F in the younger beacon group 10Y transmits a beacon 140F that is received by wireless devices 100A, 100D, and 100E. In an example embodiment of the invention, the receipt of beacon 140F from device 100F triggers joining to the beacon group 10Y as depicted in 153. The MAC of the wireless device 100A sets its timing synchronization function TSF(A) to TSF(F) in the received beacon 140F and joins the beacon group 10Y. Wireless device 100A now has a TSF value of TSF(F) that is approximately equal to TSF(Y) that is the value attributed to whole beacon group 10Y. Since this is a first join, the detection of the beacon 140F and joining to beacon group 10Y are done completely in the MAC, in accordance with at least one embodiment of the present invention. An example timing diagram is shown in the left portion of Figure 4A.

In an example embodiment of the invention, the messages transmitted by wireless devices in the beacon groups 10X and 10Y may be propagated in consecutive hops from a sender device to a receiver device and retransmitted to a next receiver device, using a smart flooding and routing protocol managed by the network layer in each device. Whenever a wireless device schedules transmission for any message, the smart flooding and routing protocol procedure will be executed. For unicast messages, the latest routing information is obtained from a Routing Table in the network layer before forwarding the message to the Link Layer of the device for transmission. The hop count value in the received message is incremented by one by each consecutive receiving device. When the maximum hop count is reached in a receiving device, as specified in the received message, the message is removed from the Message transmission buffer in the device. In an alternate embodiment, the hop count value may be initially set to the maximum hop count and decremented by one with each hop. When the hop count reaches zero, then the message is removed from the message transmission buffer in the device.

In an example embodiment of the invention, the network layer in a wireless device manages incoming messages and retransmissions with the smart-flooding and routing protocol. When a wireless device receives a message, it may perform the following operations:

1. It updates the internal tables (neighbor table, routing table and channel table) based on the message information.
2. It checks whether it already "knows" this message by "looking" at its message ID (MsgID) information that can be obtained from the network layer header. If yes, the message reception is counted and the message is discarded. If the reception-counter for a certain message has reached a threshold, the previously scheduled retransmission of that message is cancelled.
3. The message is scheduled for further transmission. For a message with a destination address, retransmission may be the next possible transmission opportunity. For a message without a destination address, retransmission may be delayed until later.
4. The message is provided to upper layers, i.e., the community layer and the awareness layer, for processing.

Figure 1C illustrates the example network diagram of Figure 1B, wherein wireless device 100A, now a member of beacon group 10Y, scans for beacons at 155. The wireless device 100B in the older beacon group 10X transmits a beacon 140B that is received by wireless devices 100A and 100C. In an example embodiment of the invention, the receipt of beacon 140B from device 100B triggers the generation of a scan report at 156. A list of candidate networks is constructed in device 100A after the Logical Link Control (LLC) receives a scan report or a reception report from the MAC. The scan report lists the beacon 140B from device 100B in beacon group 10X, with a TSF value of TSF(B). Selection of a candidate network to join, if any, is done after reception of a scan report or a reception report. The timing synchronization function TSF(A) of device 100A, which approximates the TSF(Y) of the younger beacon group 10Y, is compared with the value of TSF(B) in the received beacon 140B, which approximates the TSF(X) of the older beacon group 10X. Because beacon group 10X, as represented by beacon 140B from device 100B, is older than beacon group 10Y, as represented by TSF(A) of device 100A, beacon group 10X is selected as the target beacon group to be joined. The LLC decides to join the older beacon group 10X at 157. The LLC computes the absolute difference of the TSF values TSF(B) - TSF(A)=ΔTSF. In accordance with an example embodiment of the invention, the absolute difference of the TSF values ΔTSF is buffered in device 100A, for example in the neighbor table. The buffered value of ΔTSF may be used to accurately identify later received beacons from devices that are members of the beacon group 10X, in accordance with at least one embodiment of the present invention. The device 100A waits to join the beacon group 10X until the next beacon is received from a device in that beacon group. An example timing diagram is shown in Figure 4A.

Figure 1D illustrates the example network diagram of Figure 1C, wireless device 100A, still a member of beacon group 10Y, scans for beacons at 160 for joining. The wireless device 100C in the older beacon group 10X transmits a beacon 140C that is received by wireless devices 100A and 100B. The MAC in the device 100A determines that the beacon originated from an older beacon group at 161. The MAC therefore sets the TSF value TSF(A) of the device A equal to TSF(C) by adding the current value of TSF(A) and ΔTSF', thereby causing device 100A to join the beacon group 10X at 162. Wireless device 100A now has a TSF value of TSF(C) that is approximately equal to the value TSF(X) attributed to whole beacon group 10X. An example timing diagram is shown in Figure 4A.

Figure 1E illustrates the example network diagram of Figure 1D, wherein wireless device 100D, a member of beacon group 10Y, scans for beacons at 165. The wireless device 100A in the older beacon group 10X transmits a beacon 140A that is received by wireless devices 100B, 100C, and 100D. Normally device 100D would not receive a beacon from beacon group 10X. The reason why it receives the beacon in this example, is that device 100D was scanning for other network instances. Scanning for other network instances is done periodically within a beacon group. Scanning workload is distributed within neighbors so that not all devices in a beacon group need to scan at same time, so as to save energy. In an example embodiment of the invention, the receipt of beacon 140A from device 100A triggers the generation of a scan report in device 100D at 166. A list of candidate networks is constructed in device 100D after the Logical Link Control (LLC) receives a scan report or a reception report from the MAC. The scan report lists the beacon 140A from device 100A in beacon group 10X, with a TSF value of TSF(A). Selection of a candidate network to join, if any, is done after reception of a scan report or a reception report. The timing synchronization function TSF(D) of device 100D, which approximates the TSF(Y) of the younger beacon group 10Y, is compared with the value of TSF(A) in the received beacon 140A, which approximates the TSF(X) of the older beacon group 10X. Because beacon group 10X, as represented by beacon 140A from device 100A, is older than beacon group 10Y, as represented by TSF(D) of device 100D, beacon group 10X is selected as the target beacon group to be joined. The LLC decides to join the older beacon group 10X at 167. If there is a selected target candidate network instance to join, then the LLC issues a join command for joining that beacon group. The LLC computes the absolute difference of the TSF values TSF(A) - TSF(D)=ΔTSF. In accordance with an example embodiment of the invention, the absolute difference of the TSF values ΔTSF is buffered in device 100D, for example in the neighbor table. The buffered value of ΔTSF may be used to accurately identify later received beacons from devices that are members of the beacon group 10X, in accordance with at least one embodiment of the present invention. The device 100D waits to join the beacon group 10X until the next beacon is received from a device in that beacon group. An example timing diagram is shown in Figure 4B.

Figure 1F illustrates the example network diagram of Figure 1E, wireless device 100D, still a member of beacon group 10Y, scans for beacons. In accordance with an example embodiment of the invention, since device 100D is waiting to join the beacon group 10X until the next beacon is received from a device in that beacon group, device 100D scans within a short time period around the expected time of the TBTT for beacon group 10X at 168. The wireless device 100A in the older beacon group 10X transmits a second beacon 140A' that is received by wireless devices 100B, 100C, and 100D. The receipt of beacon 140A' from device 100A triggers joining to the beacon group 10X. The MAC concludes that the beacon 140A' is from a device that is a member of the beacon group 10X. The MAC therefore sets the TSF value TSF(D) of the device D equal to TSF(A)', thereby causing device 100D to join the beacon group 10X at 169. Wireless device 100D now has a TSF value of TSF(A)' that is approximately equal to the value TSF(X) attributed to whole beacon group 10X. In an example embodiment of the invention, joining the ad hoc beacon group 10X may require that all of the MAC and physical parameters of the wireless device 100D be synchronized with the desired ad hoc beacon group 10X. The wireless device 100D updates its timer to the value TSF(A)'. This will synchronize the timer of the wireless device 100D to the ad hoc beacon group 10X. The BSSID of the beacon group 10X may be adopted, as well as the parameters in the capability information field. Once this process is complete, the wireless device 100D has joined the ad hoc beacon group 10X and is ready to begin communicating with the devices 100B and 100C in the ad hoc beacon group 10X. An example timing diagram is shown in Figure 4B.

Figure 1G illustrates the example network diagram of Figure 1E, wherein device 100A in the older beacon group 10X scans for other network instances at 170, and device 100D in the younger beacon group 10Y performs normal beaconing. Devices 100E, 100F and 100A receive the beacon 140D from device 100D. In an example embodiment of the invention, the receipt of beacon 140D from device 100D triggers the generation of a beacon response message. Because beacon group 10Y, as represented by beacon 140D from device 100D, is younger than beacon group 10X, as represented by TSF(A) of device 100A, the MAC of device A decides to transmit a response message 144A at 171, containing TSF(A) to device 100D to inform the younger beacon group 10Y about the older beacon group 10X, in accordance with at least one embodiment of the present invention. The response message 144A is transmitted by device 100A after a delay following the receipt of the beacon 140D, of approximately the random backoff interval. An example timing diagram is shown in Figure 4C.

When a wireless device, such as device 100A, which has been passively scanning, receives a beacon signal 140D from another network 10Y, it may initiate a transmission and/or broadcast of a beacon response message 144A, or a similar dedicated data frame, comprising connectivity information corresponding to the beacon group 10X in which it is currently operating. The beacon response message 144A may be an announcement frame, as may be used to inform newly encountered networks about the presence of the existing network to which the wireless device 100A belongs. The beacon response message 144A frame may be transmitted in a manner similar to data frames that would be transmitted by wireless devices operating within the network, for example, including basic contention rules. The TSF value TSF(A) of the wireless device 100A is included in the beacon response message 144A. The Beacon response message 144A is meant for beacon group 10Y, and thus has BSSID of 10Y, TSF of 10Y and other parameters of 10Y. The value TSF(A) may be in (data) message payload or in message header. Wireless devices, such as device 100A, may transmit beacon response frames 144A upon receiving beacon frames, such as beacon 140D from other wireless devices, such as the wireless device 100D of Figure 1G. The response message 144A is transmitted by device 100A after a delay following the receipt of the beacon 140D, of approximately the random backoff interval. Beacon frames, such as 140D, received from other wireless devices, may trigger normal channel access procedures, as defined by the wireless communication protocol being used, that may then conclude with the transmission of the beacon response frame 144A of Figure 1H. Once a wireless device 100A has broadcast a beacon response frame 144A, it may continue passive scanning.

Figure 1H illustrates the example network diagram of Figure 1G, wherein the wireless device 100D receives the beacon response message 144A from the wireless device 100A in the beacon group 10X. The beacon response message 144A includes the sender's TSF value TSF(A) and the beacon period of the sender's beacon group 10X. The beacon period length specifies the time interval between TBTTs in group 10X. The beacon period value is constant during the lifetime of the network (or the beacon group) and each device in the beacon group 10X has the same value. When the MAC of device 100D receives the beacon response message 144A, it passes it up to the LLC. In accordance with an example embodiment of the invention, the LLC decides the device 100D will join the beacon group 10X at 172, without waiting for receipt of a later beacon from Group 10X. In accordance with an example embodiment of the invention, the absolute difference of the TSF values TSF(A) - TSF(D)=$\Delta$TSF is buffered in device 100D, for example in the neighbor table. The buffered value of $\Delta$TSF may be used to accurately identify later received beacons from devices that are members of the beacon group 10X, in accordance with at least one embodiment of the present invention.

Figure 1I illustrates the example network diagram of Figure 1H, wherein the LLC of the wireless device 100D has decided to estimate the TSF value without waiting for receipt of a later beacon from Group 10X. The LLC calculates $\Delta$TSF + TSF(D) as the new value of TSF for device 100D to join beacon group 10X. The LLC passes the new TSF value to the MAC to perform the TSF adjustment to join group 10X. The MAC calculates the next TBTT time based on the new TSF value, just as the MAC would do if it were to receive the new TSF value in a beacon from an older device. Device 100D has now joined the beacon group 10X at 173, in accordance with at least one embodiment of the present invention. An example timing diagram is shown in Figure 4C.

Figure 1J illustrates the example network diagram of Figure 1I, wherein a later beacon 140A" is sent by device 100A and received by device 100D. Device 100D adjusts its TSF(D) value based on the value ofTSF(A)" in the received beacon. The device 100D calculates the absolute value of TSF(A)" - TSF(D) = $\Delta$TSF" and adjusts TSF(D) to minimize $\Delta$TSF" - $\Delta$TSF = Z, in accordance with at least one embodiment of the present invention. An example timing diagram is shown in Figure 4D.

Figure 2 is an example functional block diagram of the wireless device 100A of the older beacon group 10X and the wireless device 100D of the younger beacon group 10Y of Figure 1E, in accordance with at least one embodiment of the present invention. Figure 2 shows an example embodiment of the internal architecture of the wireless device 100D receiving the beacon packet 140A from the wireless device 100A and an example embodiment of the internal architecture of the wireless devices 100A and 100D. The figure shows an example embodiment of the wireless device 100D in its operation to join the beacon group 10X by collecting TSF information from Beacons received during passive scanning periods. The wireless device 100D listens with radio 208 on a channel for a period of time and adds any received beacons to its cached BSSID scan list in its RAM 262. The figure shows the wireless device 100D receiving a beacon 140A from the wireless device 100A in the beacon group 10X. The LLC of device 100D detects in the scan report that the beacon 140A indicates by its TSF(A) value that there is an older beacon group candidate 10X than beacon group 10Y, and thus the LLC selects 10X for joining. The oldest received TSF within the candidate beacon group of beacons is selected as the target TSF. The LLC calculates a new TSF for join. The LLC of device 100D computes the difference between the received TSF(A) and its TSF(D) as a value $\Delta$TSF, in accordance with at least one embodiment of the present invention.

In an example embodiment of the invention, Figure 2 shows the wireless device 100D computing the difference between its own TSF value TSF(D) and the received TSF value TSF(A) in the beacon 140A from the device 100A in the beacon group 10X, as a value $\Delta$TSF, as indicated in the buffer 150'. The figure shows the wireless device 100D then adding the value ΔTSF to its own TSF value TSF(D) to obtain a new TSF value approximately equal to TSF(X) for joining the first beacon group 10X.

In an example embodiment of the invention, the wireless device 100A and the wireless device 100D may be a communications device, PDA, cell phone, laptop or palmtop computer, or the like or it may be a stationary access point, automotive dashboard interface, home electronics interface or other stationary interface or device. The wireless device 100A and the wireless device 100D may be a remote controller, healthcare monitor, sports sensor, token, key fob, watch, wireless keyboard, gaming pad, body sensor, toy, health care equipment, human interface device, entertainment device, wireless microphone, GPS sensor, or the like.

In an example embodiment of the invention, the wireless device 100A and the wireless device 100D may include a processor 220 that includes a single core or multi-core central processing unit (CPU) 260 and 261, a random access memory (RAM) 262, a read only memory (ROM) 264, and interface circuits 266 to interface with the radio transceiver 208. The wireless device 100A and the wireless device 100D may each further include a battery and other power sources, key pad, touch screen, display, microphone, speakers, ear pieces, camera or other imaging devices, etc. The RAM 262 and ROM 264 may be removable memory devices such as smart cards, SIMs, WIMs, semiconductor memories such as RAM, ROM, PROMS, flash memory devices, etc. according to an embodiment of the present invention. According to an example embodiment of the invention, the wireless device 100A and the wireless device 100D each include the awareness protocol stack 202.

In an example embodiment of the invention, the awareness protocol stack 202 may include the Awareness Layer, the Community Layer, the Network Layer, and the Link Layer that is divided into two sub layers: the logical link control (LLC) and the media access control (MAC). The Neighbor Table 142 in the logical link control (LLC), may include a list of all the network instances having member neighboring devices that have been heard from in the recent past. In an example embodiment of the invention, for each network instance in the neighbor table, a record or entry is made of at least its SSID and BSSID, which are recorded from the values in the most recently received beacon or beacon response message from the network instance. In an example embodiment of the invention, the neighbor table may also include the TSF value from a network instance, and it may be updated from the beacons and beacon response messages received from the network instance. The record may also include the received signal strength and an identifying indicium entered by the user or the application that identifies past memberships with the network instance, conversational sessions with a user of a device in the network instance, or other characteristics of the network instance. The Neighbor Table 142 in the logical link control (LLC) is updated when reception reports and scan reports are received from the MAC layer. The MAC passes to the LLC in the reception report, the SSID, BSSID, and other values of all the messages received during the previous awake period.

In an example embodiment of the invention, the logical link control (LLC) may make a merging or join decision to join a particular targeted network instance or beacon group, either autonomously or in response to an application. The logical link control (LLC) issues a join-command, specifying the particular targeted network instance or beacon group to join. The logical link control (LLC) looks up the specified identifying indicium, the specified received signal strength or other specified characteristic recorded in the Neighbor Table and obtains the SSID and BSSID, and other values of all the messages received during the previous awake period.

In an example embodiment of the invention, the processor 220, protocol stack 202 and/or application program 200 may be embodied as program logic stored in the RAM 262 and/or ROM 264 in the form of sequences of programmed instructions which, when executed in the CPUs 260 and/or 261, carry out the functions of the disclosed embodiments. The program logic may be delivered to the writeable RAM, PROMS, flash memory devices, etc. 262 of the wireless device 100A and the wireless device 100D from a computer program product or article of manufacture in the form of computer-usable media such as resident memory devices, smart cards or other removable memory devices, as illustrated in Figure 7. Alternately, they may be embodied as integrated circuit logic in the form of programmed logic arrays or custom designed application specific integrated circuits (ASIC). The radio 208 in the each of the wireless device 100A and the wireless device 100D may be separate transceiver circuits or alternately, the radio 208 may be a single radio module capable of handling one or multiple channels in a high speed, time and frequency multiplexed manner in response to the processor 220. The program code for instructing the apparatus to perform its various operations may be stored in computer readable media, for example magnetic disks, CD ROMS, or flash memory devices. The program code may be downloaded from such computer readable media to be stored for example in the RAM 262 or programmable ROM 264 of the wireless device 100A and the wireless device 100D for execution of the program code for example by the CPUs 260 and/or 261. Removable storage media 126 are shown in Figure 7.

Figure 3A illustrates an example flow diagram 300 of an example operation of the wireless device 100D, in accordance with an example embodiment of the invention. The steps of the flow diagram represent computer code instructions stored in the RAM and/or ROM memory, which when executed by the central processing units (CPU) CPU1 and/or CPU2, carry out the functions of the example embodiments of the invention. The steps may be carried out in another order than shown and individual steps may be combined or separated into component steps. The flow diagram has the following steps:

Step 302: receiving, by an apparatus, one or more wireless messages, each of the one or more wireless messages including a first timing synchronization function value of a respective one of one or more candidate beacon groups from which the one or more wireless messages are sent;

Step 304: calculating a first difference between a selected target timing synchronization function value and a timing synchronization function value of the apparatus;

Step 306: receiving, by the apparatus, subsequent wireless messages, each of the subsequent one or more wireless messages including a second timing synchronization function value of a respective one of the one or more candidate beacon groups from which the subsequent wireless messages are sent;

Step 308: calculating, by the apparatus, second differences between the subsequently received one or more second timing synchronization function values and the timing synchronization function value of the apparatus; and

Step 310: selecting, by the apparatus, a target beacon group for joining having a second difference within a predefined threshold from the first difference.

Figure 3B shows an example format of a beacon packet 140A transmitted by wireless device 100A, in accordance with at least one embodiment of the present invention.

The beacon packet 140A may include:

SSID,

BSSID,

TSF value and the beacon period of the beacon group 10X, and

LLC Parameters.

Figure 3C shows an example format of a beacon response message packet 144A transmitted by wireless device 100A in Figure 1G, in accordance with at least one embodiment of the present invention.

The beacon response message packet 144A may include:

SSID,

BSSID of the original beacon,

TSF(A) of the original beacon, and

A payload field that includes the sender's TSF value and the beacon period of the beacon group 10X.

Figure 4A illustrates an example timing diagram of a Join-procedure, as shown in Figures 1A, 1B, 1C, and 1D, in accordance with at least one embodiment of the present invention. The target beacon transmission times (TBTT) for the wireless device 100A are shown as TBTT(1) through TBTT(U). An application in wireless device 100A commands the device to join to a network and the device begins scanning for beacons, as depicted in 151 and 152. Wireless device 100F in the younger beacon group 10Y transmits a beacon 140F that is received by wireless devices 100A, wireless device 100A sets its timing synchronization function TSF(A) to the value of TSF(F) in the received beacon and joins the beacon group 10Y at 153, as shown in Figure 1B. At a later point of time wireless device 100A scans for beacons at 155 and wireless device 100B in the older beacon group 10X transmits a beacon 140B that is received by wireless device 100A. A list of candidate networks is constructed in device 100A after the Logical Link Control (LLC) receives a scan report or a reception report from the MAC at 156. The scan report lists the beacon 140B from device 100B in beacon group 10X, with a TSF value of TSF(B). Selection of a candidate network to join, if any, is done after reception of a scan report or a reception report. The timing synchronization function TSF(A) of device 100A, which approximates the TSF(Y) of the younger beacon group 10Y, is compared with the value of TSF(B) in the received beacon 140B, which approximates the TSF(X) of the older beacon group 10X. Because beacon group 10X, as represented by beacon 140B from device 100B, is older than beacon group 10Y, as represented by TSF(A) of device 100A, beacon group 10X is selected as the target beacon group to be joined. The LLC decides to join the older beacon group 10X at 157, as shown in Figure 1C. The wireless device 100C in the older beacon group 10X transmits a later beacon 140C that is received by wireless device 100A during scan 160. The MAC sets the TSF value TSF(A) of the device A equal to TSF(C), thereby causing device 100A to join the beacon group 10X at 162, as shown in Figure 1D.

Figure 4B illustrates an example timing diagram of a Join-procedure triggered by a beacon, which uses $\Delta$TSF and a short scan, as shown in Figures 1E and 1F, in accordance with at least one embodiment of the present invention. The target beacon transmission times (TBTT) for the wireless device 100A are shown as TBTT(7) through TBTT(12). Wireless device 100D, a member of beacon group 10Y, scans for beacons at 165. The wireless device 100A in the older beacon group 10X transmits a beacon 140A that is received by wireless device 100D. The receipt of beacon 140A from device 100A triggers the generation of a scan report in device 100D at 166. The timing synchronization function TSF(D) of device 100D, which approximates the TSF(Y) of the younger beacon group 10Y, is compared with the value of TSF(A) in the received beacon 140A, which approximates the TSF(X) of the older beacon group 10X. Because beacon group 10X, as represented by beacon 140A from device 100A, is older than beacon group 10Y, as represented by TSF(D) of device 100D, beacon group 10X is selected as the target beacon group to be joined. The LLC decides to join the older beacon group 10X at 167. The LLC computes the absolute difference of the TSF values TSF(A) - TSF(D)=$\Delta$TSF. In accordance with an example embodiment of the invention, the absolute difference of the TSF values $\Delta$TSF is buffered in device 100D, to be used to identify later received beacons from devices that are members of the beacon group 10X.

The device 100D waits to join the beacon group 10X until the next beacon is received from a device in that beacon group, as shown in Figure 1E. Since device 100D is waiting to join the beacon group 10X until the next beacon is received from a device in that beacon group, device 100D scans within a short time period around the expected time of the TBTT for beacon group 10X at 168. The wireless device 100A in the older beacon group 10X transmits a second beacon 140A' that is received by wireless device 100D. The MAC sets the TSF value TSF(D) of the device D equal to TSF(A)', thereby causing device 100D to join the beacon group 10X at 169, as shown in Figure 1F.

Figure 4C illustrates an example timing diagram of a Join-procedure triggered by a beacon response message, which uses ΔTSF and TSF adjustment, as shown in Figures 1G, 1H, 1I, and 1J, in accordance with at least one embodiment of the present invention. The target beacon transmission times (TBTT) for the wireless device 100A are shown as TBTT (7) through TBTT(T+1). Device 100A in the older beacon group 10X scans for other network instances at 170, and device 100D in the younger beacon group 10Y performs normal beaconing. Device 100A receives the beacon 140D from device 100D. The timing synchronization function TSF(A) of device 100A, which approximates the TSF(X) of the older beacon group 10X, is compared with the value of TSF(D) in the received beacon 140D, which approximates the TSF(Y) of the younger beacon group 10Y. The MAC of device 100A decides to transmit a response message 144A containing TSF (A) to device 100D to inform the younger beacon group 10Y about the older beacon group 10X. The response message 144A is transmitted by device 100A after a delay following the receipt of the beacon 140D, of approximately the random backoff interval. The wireless device 100D receives the beacon response message 144A from the wireless device 100A in the beacon group 10X. The beacon response message 144A includes the sender's TSF value TSF(A) and the beacon period of the sender's beacon group 10X. The LLC decides the device 100D will join the beacon group 10X at 172, without waiting for receipt of a later beacon from Group 10X. In accordance with an example embodiment of the invention, the absolute difference of the TSF values TSF(A) - TSF(D)=ΔTSF is buffered in device 100D. The buffered value of ΔTSF may be used to accurately identify later received beacons from devices that are members of the beacon group 10X. The LLC of the wireless device 100D has decided to estimate the TSF value without waiting for receipt of a later beacon from Group 10X. The LLC calculates ΔTSF + TSF(D) as the new value of TSF for device 100D to join beacon group 10X. The LLC passes the new TSF value to the MAC to perform the TSF adjustment to join group 10X. The MAC calculates the next TBTT time based on the new TSF value. Device 100D has now joined the beacon group 10X at 173, as shown in Figure 1I. A later beacon 140A" is received by device 100D. Device 100D adjusts its TSF(D) value based on the value of TSF(A)" in the received beacon. The device 100D calculates TSF(A)" - TSF(D) = ΔTSF" and adjusts TSF(D) to minimize ΔTSF" - ΔTSF = Z, as shown in Figure 1J.

Figure 4D illustrates an example timing diagram of a Join-procedure triggered by a beacon, which uses ΔTSF and TSF adjustment, as shown in Figures 1E, 1I, and 1J, in accordance with at least one embodiment of the present invention. The target beacon transmission times (TBTT) for the wireless device 100A are shown as TBTT(7) through TBTT(T+1). Device 100D in the younger beacon group 10Y scans for other network instances at 165, and device 100A in the older beacon group 10X performs normal beaconing, as shown in Figure 1E. Device 100D receives the beacon 140A from device 100A. The receipt of beacon 140A from device 100A triggers the generation of a scan report in device 100D at 166. The timing synchronization function TSF(D) of device 100D, which approximates the TSF(Y) of the younger beacon group 10Y, is compared with the value of TSF(A) in the received beacon 140A, which approximates the TSF(X) of the older beacon group 10X. The LLC of device 100D decides to join beacon group 10X at 167, as shown in Figure 1E. In accordance with an example embodiment of the invention, the absolute difference of the TSF values TSF(A) - TSF(D)=ΔTSF is buffered in device 100D. The buffered value of ΔTSF may be used to accurately identify later received beacons from devices that are members of the beacon group 10X. The LLC of the wireless device 100D has decided to estimate the TSF value without waiting for receipt of a later beacon from Group 10X. The LLC calculates ΔTSF + TSF (D) as the new value of TSF for device 100D to join beacon group 10X. The LLC passes the new TSF value to the MAC to perform the TSF adjustment to join group 10X. The MAC calculates the next TBTT time based on the new TSF value. Device 100D has now joined the beacon group 10X at 173, as shown in Figure 1I. A later beacon 140A" is received by device 100D, as shown in Figure 1J. Device 100D adjusts its TSF(D) value based on the value of TSF(A)" in the received beacon. The device 100D calculates TSF(A)" - TSF(D) = ΔTSF" and adjusts TSF(D) to minimize ΔTSF" - ΔTSF = Z, as shown in Figure 1J.

Figure 5 illustrates an example signaling diagram of the Join-procedure that uses ΔTSF, in accordance with at least one embodiment of the present invention. In an example embodiment of the invention, initially the device 100D in in the beacon group 10Y wants to move to the targeted beacon group 10X. The MAC of the wireless device 100D may remain in the awake state looking for a beacon or beacon response message that contains a TSF value close enough to the TSF value TSF(X) of the targeted beacon group 10X, having the proper SSID and BSSID. When a proper beacon 140A or beacon response message 144A is received, the MAC in device 100D may adopt the parameters signaled in the beacon 140A or beacon response message 144A , synchronize to it, and continue its own beaconing as a member of the targeted beacon group 10X. In an example embodiment of the invention, the sequence of steps in the signaling diagram of Figure 3, may be as follows:

(1) store received Beacon 140A or Beacon response message 144D information (MAC-address, Received Channel Power Indicator (RCPI), timestamp) in the Neighbor Table and call Join (Network A, ΔTSF, Threshold), Threshold = 1000 us for example, and await Join Response.

(2) change BSSID to beacon group 10X and keep the receiver open until a Beacon 140A or beacon response message 144A is received from beacon group 10X or Join Timeout occurs.

(3) synchronize by the received Beacon or beacon response message TSF(A) if (recvBSSID == beacon group 10X) and (TSF(D) + (ΔTSF-Threshold) ≤ TSF(A) and send Join Response.

(4) clear current TSF value from the Neighbor Table and swap it with [TSF(D) + (ΔTSF)] and add a neighbor to Neighbor Table if the MAC-address in Beacon in the Join Response is new.

This example embodiment of the invention solves the unique BSSID problem. The TSF(A) value is close enough to the TSF(X) value of the targeted beacon group 10X to accommodate some TSF drifting. For example, the TSF(A) value in the received beacon 140A may be allowed to be +/-1 time unit (TU = 1024 us) different from the TSF(X) value of the targeted beacon group 10X to consider the received beacon to represent the targeted beacon group 10X.

In an example embodiment of the invention, the MAC may open the receiver only in intervals when Beacons are likely to be received. The MAC and radio of the wireless device may go into the Doze state and wake up for reception of a Beacon from the targeted network instance. Wakeup needs to happen early enough for the MAC and radio to be ready to receive a Beacon frame at a TBTT of the targeted network instance. Once in the Awake state, the process performs the same steps as in the first example embodiment of the invention. In an example embodiment of the Join-mechanism. the MAC opens its receiver only in intervals when Beacons are likely to be received. As an example, the number of microseconds to sleep from TBTT to the point when receiver needs to be open is: $\alpha$-Threshold, where $\alpha$ = mod (ΔTSF, beaconPeriod) and the number of microseconds until the interval is closed is $\alpha$+Threshold, where Threshold is a constant given in microseconds. If $\alpha \leq$ Threshold, the receiver is opened immediately. In case a beacon from the other aware network is missed (receiver closed without receiving a Beacon), the receiver opens periodically after n* (beaconPeriod - 2*Threshold) microseconds has elapsed, and where n = 1. The interval between two TBTT instances and the Join-timeout are standard awareness Join-parameters. This example embodiment of the invention solves the unique BSSID problem and decreases power consumption in the Join operation.

Figure 6 illustrates an example signaling diagram of the Join-procedure without waiting for a Beacon, in accordance with at least one embodiment of the present invention. The MAC of the wireless device may immediately adopt the parameters of the targeted network instance and synchronize to its TSF and TBTT sequence without waiting for a Beacon from the targeted network instance. It may adjust the TBTT sequence to be in synchrony with the one of the targeted network instance. It may continue beaconing as a new member of the targeted network instance. Once the MAC has completed this move to the new network instance, it continues operations normally as a member of the new network instance by participating in beaconing first time at the next TBTT of the new network instance.

In an example embodiment of the invention, the sequence of steps of the Join-procedure that uses ΔTSF, may be as follows:

(1) store received Beacon or Beacon response message information (MAC-address, RCPI, timestamp) to a temporary Neighbor Table and call Join (Network A, ΔTSF).

(2) add ΔTSF to the device TSF.

(3) synchronize by received Beacon TSF if (recvBSSID == Network A) and (device TSF + (ΔTSF-Threshold) ≤ recvTSF) and send Join Response.

(4) clear current TSF from Neighbor Table and swap it with the temporary one and add a neighbor to Neighbor Table if the MAC-address in Beacon in the Join Response is new.

Figure 7 illustrates an example embodiment of the invention, wherein examples of removable storage media 126 are shown, based on magnetic, electronic and/or optical technologies, such as magnetic disks, optical disks, semiconductor memory circuit devices and micro-SD memory cards (SD refers to the Secure Digital standard) for storing data and/or computer program code as an example computer program product, in accordance with at least one embodiment of the present invention.

An example embodiment of the invention minimizes power consumption, since there is no need for a device to be awake if there is no beaconing in the other network:

An example embodiment of the invention minimizes communication breaks, since the direct synchronization Join may take place immediately.

Although specific example embodiments have been disclosed, a person skilled in the art will understand that changes can be made to the specific example embodiments without departing from the scope of the invention.

**Claims**

1.  A method, comprising:

    receiving, by an apparatus, one or more wireless messages, each of the one or more wireless messages including a first timing synchronization function value of a respective one of one or more candidate beacon groups from which the one or more wireless messages are sent;
    calculating a first difference between a selected target timing synchronization function value and a timing synchronization function value of the apparatus;
    receiving, by the apparatus, subsequent wireless messages, each of the subsequent one or more wireless messages including a second timing synchronization function value of a respective one of the one or more candidate beacon groups from which the subsequent wireless messages are sent;
    calculating, by the apparatus, second differences between the subsequently received one or more second timing synchronization function values and the timing synchronization function value of the apparatus; and
    selecting, by the apparatus, a target beacon group for joining having a second difference within a predefined threshold from the first difference.

2.  The method of claim 1, further comprising:

    selecting, by the apparatus, a largest timing synchronization function value from the received one or more first timing synchronization function values as a target timing synchronization function value.

3.  The method of claim 1, further comprising:

    determining that the first difference exceeds a predetermined threshold.

4.  The method of claim 1, further comprising:

    joining by the apparatus, the selected target beacon group for joining.

5.  The method of claim 1, further comprising:

    adjusting by the apparatus, the timing synchronization function value of the apparatus, based on the second timing synchronization function value, when the second difference is within a predefined threshold from the first difference.

6.  The method of claim 1, wherein the one or more received wireless messages is at least one of a beacon message and a beacon response message.

7.  The method of claim 1, wherein the apparatus performs at least one of remaining in an awake state while scanning for wireless messages, entering a doze state and waking up for scanning for wireless messages, or immediately adopting a timing synchronization function value attributed to a beacon group that the apparatus desires to join, without waiting for the received wireless messages.

8.  A computer program comprising computer readable program code configured to cause performing of a method according to of at least one of the preceding claims when said program is run on a computer.

9.  A computer program according to claim 8, wherein the computer program is a computer program product comprising a computer-readable medium bearing computer program code embodied therein for use with a computer.

10. An apparatus, comprising:

    means for receiving one or more wireless messages, each of the one or more wireless messages including a first timing synchronization function value of a respective one of one or more candidate beacon groups from which the one or more wireless messages are sent;
    means for calculating a first difference between a selected target timing synchronization function value and a timing synchronization function value of the apparatus;
    means for receiving subsequent wireless messages, each of the subsequent one or more wireless messages

21

including a second timing synchronization function value of a respective one of the one or more candidate beacon groups from which the subsequent wireless messages are sent;

means for calculating second differences between the subsequently received one or more second timing synchronization function values and the timing synchronization function value of the apparatus; and

means for selecting a target beacon group for joining having a second difference within a predefined threshold from the first difference.

11. The apparatus of claim 10, further comprising:

means for selecting a largest timing synchronization function value from the received one or more first timing synchronization function values as a target timing synchronization function value.

12. The apparatus of claim 10, further comprising:

means for determining that the first difference exceeds a predetermined threshold.

13. The apparatus of claim 10, further comprising:

means for joining the selected target beacon group for joining.

14. The apparatus of claim 10, further comprising:

means for adjusting the timing synchronization function value of the apparatus, based on the second timing synchronization function value, when the second difference is within a predefined threshold from the first difference.

15. The apparatus of claim 10, wherein the one or more received wireless messages is at least one of a beacon message and a beacon response message.

FIG. 1A

WIRELESS DEVICE 100C
TSF(C) ≈ TSF(X)

151 APPLICATION COMMAND: JOIN A NETWORK

152 SCAN FOR A BEACON

WIRELESS DEVICE 100A
TSF(A)

WIRELESS DEVICE 100D
TSF(D) ≈ TSF(Y)

WIRELESS DEVICE 100E
TSF(E) ≈ TSF(Y)

BEACON GROUP 10X IS OLDER THAN BEACON GROUP 10Y

WIRELESS DEVICE 100B
TSF(B) ≈ TSF(X)

NETWORK INSTANCE OR BEACON GROUP 10X

NETWORK INSTANCE OR BEACON GROUP 10Y

WIRELESS DEVICE 100F
TSF(F) ≈ TSF(Y)

AD HOC NETWORK 5

# FIG. 1B

WIRELESS DEVICE 100C

TSF(C) ≈ TSF(X)

RCV BEACON 140F

SET TSF(A) ≈ TSF(F)

153

JOIN BEACON GROUP 10Y
TSF(A) ≈ TSF(Y)

WIRELESS DEVICE 100A

TSF(A)

WIRELESS DEVICE 100D

TSF(D) ≈ TSF(Y)

140F

BEACON TSF(F)

WIRELESS DEVICE 100E

TSF(E) ≈ TSF(Y)

WIRELESS DEVICE 100B

TSF(B) ≈ TSF(X)

NETWORK INSTANCE OR BEACON GROUP 10X

NETWORK INSTANCE OR BEACON GROUP 10Y

WIRELESS DEVICE 100F

TSF(F) ≈ TSF(Y)

AD HOC NETWORK 5

EP 2 709 386 A1

**FIG. 1C**

WIRELESS DEVICE 100D
TSF(D) ≈ TSF(Y)

WIRELESS DEVICE 100E
TSF(E) ≈ TSF(Y)

WIRELESS DEVICE 100F
TSF(F) ≈ TSF(Y)

NETWORK INSTANCE OR BEACON GROUP 10Y

AD HOC NETWORK 5

WIRELESS DEVICE 100A
TSF(A) ≈ TSF(Y)

155 — SCAN FOR BEACONS
156 — RCV BEACON 140B
157 — SCAN REPORT
TSF(B) > TSF(A)
DECIDE TO JOIN 10X
TSF(B) - TSF(A)=ΔTSF

BEACON TSF(B)
140B

140B

NETWORK INSTANCE OR BEACON GROUP 10X

WIRELESS DEVICE 100C
TSF(C) ≈ TSF(X)

BEACON GROUP 10X IS OLDER THAN BEACON GROUP 10Y

WIRELESS DEVICE 100B
TSF(B) ≈ TSF(X)

# FIG. 1D

| |
|---|
| SCAN FOR BEACONS |
| RCV BEACON 140C |
| TSF(C) > TSF(A) + TH CONCLUDE OLDER GROUP |
| SET TSF(A) = TSF(C) |
| JOIN GROUP 10X TSF(A) ≈ TSF(X) |

160
161
162

**WIRELESS DEVICE 100C**
TSF(C) ≈ TSF(X)

**WIRELESS DEVICE 100A**
TSF(A) ≈ TSF(X)

JOIN NETWORK BEACON GROUP 10X

BEACON TSF(C)
140C

NETWORK INSTANCE OR BEACON GROUP 10X

140C

**WIRELESS DEVICE 100D**
TSF(D) ≈ TSF(Y)

**WIRELESS DEVICE 100E**
TSF(E) ≈ TSF(Y)

**WIRELESS DEVICE 100B**
TSF(B) ≈ TSF(X)

BEACON GROUP 10X IS OLDER THAN BEACON GROUP 10Y

NETWORK INSTANCE OR BEACON GROUP 10Y

**WIRELESS DEVICE 100F**
TSF(F) ≈ TSF(Y)

AD HOC NETWORK 5

EP 2 709 386 A1

FIG. 1E

EP 2 709 386 A1

# FIG. 1F

**WIRELESS DEVICE 100C**

TSF(C) ≈ TSF(X)

**WIRELESS DEVICE 100A**

TSF(A) ≈ TSF(X)

BEACON TSF(A)'   140A'

JOIN NETWORK BEACON GROUP 10X

**WIRELESS DEVICE 100D**

TSF(D) ≈ TSF(X)

| SHORT SCAN AROUND EXPECTED TBTT 168 |
| RCV BEACON 140A' |
| TSF(A)' > TSF(D) + TH OLDER GROUP |
| SET TSF(D) = TSF(A)' |
| JOIN GROUP 10X TSF(D) ≈ TSF(X) 169 |

140A'

140A'

NETWORK INSTANCE OR BEACON GROUP 10X

**WIRELESS DEVICE 100E**

TSF(E) ≈ TSF(Y)

**WIRELESS DEVICE 100B**

TSF(B) ≈ TSF(X)

BEACON GROUP 10X IS OLDER THAN BEACON GROUP 10Y

NETWORK INSTANCE OR BEACON GROUP 10Y

**WIRELESS DEVICE 100F**

TSF(F) ≈ TSF(Y)

AD HOC NETWORK 5

FIG. 1G

SCAN FOR BEACONS
RCV BEACON 140D
TSF(A) > TSF(D)
SEND RESPONSE

170
171

WIRELESS DEVICE 100C
TSF(C) ≈ TSF(X)

WIRELESS DEVICE 100A
TSF(A) ≈ TSF(X)

140D
BEACON TSF(D)

WIRELESS DEVICE 100D
TSF(D) ≈ TSF(Y)

140D

NETWORK INSTANCE OR BEACON GROUP 10X

WIRELESS DEVICE 100E
TSF(E) ≈ TSF(Y)

140D

WIRELESS DEVICE 100B
TSF(B) ≈ TSF(X)

BEACON GROUP 10X IS OLDER THAN BEACON GROUP 10Y

NETWORK INSTANCE OR BEACON GROUP 10Y

WIRELESS DEVICE 100F
TSF(F) ≈ TSF(Y)

AD HOC NETWORK 5

EP 2 709 386 A1

# FIG. 1H

WIRELESS DEVICE 100C

TSF(C) ≈ TSF(X)

WIRELESS DEVICE 100A

TSF(A) ≈ TSF(X)

RESPONSE TSF(A)  144A

BEACON RESPONSE MESSAGE

WIRELESS DEVICE 100D

TSF(D) ≈ TSF(Y)

| RCV RESPONSE 144A |
| RECEPTION REPORT |
| TSF(A) > TSF(D) |
| DECIDE TO JOIN 10X 172 |
| TSF(A) - TSF(D)=ΔTSF |

NETWORK INSTANCE OR BEACON GROUP 10X

WIRELESS DEVICE 100E

TSF(E) ≈ TSF(Y)

WIRELESS DEVICE 100B

TSF(B) ≈ TSF(X)

BEACON GROUP 10X IS OLDER THAN BEACON GROUP 10Y

NETWORK INSTANCE OR BEACON GROUP 10Y

WIRELESS DEVICE 100F

TSF(F) ≈ TSF(Y)

AD HOC NETWORK 5

EP 2 709 386 A1

# FIG. 1I

WIRELESS DEVICE 100C

TSF(C) ≈ TSF(X)

WIRELESS DEVICE 100A

TSF(A) ≈ TSF(X)

WIRELESS DEVICE 100D

TSF(D) ≈ TSF(X)

JOIN NETWORK BEACON GROUP 10X

ESTIMATE TSF

SET TSF(D) = TSF(D)+ΔTSF

MAC JOINS THE BEACON GROUP 10X

TSF(D) ≈ TSF(X)

173

NETWORK INSTANCE OR BEACON GROUP 10X

WIRELESS DEVICE 100E

TSF(E) ≈ TSF(Y)

WIRELESS DEVICE 100B

TSF(B) ≈ TSF(X)

BEACON GROUP 10X IS OLDER THAN BEACON GROUP 10Y

NETWORK INSTANCE OR BEACON GROUP 10Y

WIRELESS DEVICE 100F

TSF(F) ≈ TSF(Y)

AD HOC NETWORK 5

EP 2 709 386 A1

EP 2 709 386 A1

# FIG. 1J

WIRELESS DEVICE 100C

$TSF(C) \approx TSF(X)$

WIRELESS DEVICE 100A

$TSF(A) \approx TSF(X)$

BEACON TSF(A)"

140A"

LATER BEACON 140A"

WIRELESS DEVICE 100D

$TSF(D) \approx TSF(X)$

RCV BEACON 140A"

SCAN REPORT

$TSF(A)" - TSF(D) = \Delta TSF"$

ADJUST TSF(D) TO MINIMIZE $\Delta TSF" - \Delta TSF \approx Z$

NETWORK INSTANCE OR BEACON GROUP 10X

WIRELESS DEVICE 100E

$TSF(E) \approx TSF(Y)$

WIRELESS DEVICE 100B

$TSF(B) \approx TSF(X)$

BEACON GROUP 10X IS OLDER THAN BEACON GROUP 10Y

NETWORK INSTANCE OR BEACON GROUP 10Y

WIRELESS DEVICE 100F

$TSF(F) \approx TSF(Y)$

AD HOC NETWORK 5

EP 2 709 386 A1

# FIG. 2

**WIRELESS DEVICE 100D**

CPU 260

CPU 261

RAM 262

ROM 264

INTERFC. CKTS 266

APPLICATION

220

202

200

AWARENESS PROTOCOL STACK

AWARENESS LAYER

COMMUNITY LAYER

NETWORK LAYER

LOGICAL LINK CTRL

MAC LAYER

TIMER 135

150'

TSF(A) > TSF(Y)

TSF(A) - TSF(D)=ΔTSF

TSF(D)+ΔTSF= NEW TSF FOR JOIN

RADIO 208

142

NEIGHBOR TABLE

SSID BSSID ID(A)

SSID BSSID ID(F)

REMOVABLE STORAGE 126 (SEE FIG. 7)

140A

BEACON TSF(A)

**WIRELESS DEVICE 100A**

APPLICATION

200

202

220

AWARENESS PROTOCOL STACK

AWARENESS LAYER

COMMUNITY LAYER

NETWORK LAYER

LOGICAL LINK CTRL

MAC LAYER

CPU 260

CPU 261

RAM 262

ROM 264

INTERFC. CKTS 266

TIMER 135

150

BUFFER

RADIO 208

142

NEIGHBOR TABLE

REMOVABLE STORAGE 126 (SEE FIG. 7)

# FIG. 3A

300

STEP 302: RECEIVING, BY AN APPARATUS, ONE OR MORE WIRELESS MESSAGES, EACH OF THE ONE OR MORE WIRELESS MESSAGES INCLUDING A FIRST TIMING SYNCHRONIZATION FUNCTION VALUE OF A RESPECTIVE ONE OF ONE OR MORE CANDIDATE BEACON GROUPS FROM WHICH THE ONE OR MORE WIRELESS MESSAGES ARE SENT;

STEP 304: CALCULATING A FIRST DIFFERENCE BETWEEN A SELECTED TARGET TIMING SYNCHRONIZATION FUNCTION VALUE AND A TIMING SYNCHRONIZATION FUNCTION VALUE OF THE APPARATUS;

STEP 306: RECEIVING, BY THE APPARATUS, SUBSEQUENT WIRELESS MESSAGES, EACH OF THE SUBSEQUENT ONE OR MORE WIRELESS MESSAGES INCLUDING A SECOND TIMING SYNCHRONIZATION FUNCTION VALUE OF A RESPECTIVE ONE OF THE ONE OR MORE CANDIDATE BEACON GROUPS FROM WHICH THE SUBSEQUENT WIRELESS MESSAGES ARE SENT;

STEP 308: CALCULATING, BY THE APPARATUS, SECOND DIFFERENCES BETWEEN THE SUBSEQUENTLY RECEIVED ONE OR MORE SECOND TIMING SYNCHRONIZATION FUNCTION VALUES AND THE TIMING SYNCHRONIZATION FUNCTION VALUE OF THE APPARATUS; AND

STEP 310: SELECTING, BY THE APPARATUS, A TARGET BEACON GROUP FOR JOINING HAVING A SECOND DIFFERENCE WITHIN A PREDEFINED THRESHOLD FROM THE FIRST DIFFERENCE.

# FIG. 3B

140A

| BEACON | DESTINATION ADDRESS | SOURCE ADDRESS | BEACON PERIOD OF SENDER | SSID | BSSID OF SENDER | TSF(A) TIMESTAMP OF SENDER | LLC PARAMETERS | CRC |
|---|---|---|---|---|---|---|---|---|

# FIG. 3C

144A

| | | | | | | | PAYLOAD | | |
|---|---|---|---|---|---|---|---|---|---|
| BEACON RESPONSE MESSAGE | DESTINATION ADDRESS | SOURCE ADDRESS | | SSID | BSSID OF ORIGINAL BEACON | TSF TIMESTAMP OF ORIGINAL BEACON | SENDER'S TSF(A) TIMESTAMP | SENDER'S BEACON PERIOD | CRC |

EP 2 709 386 A1

FIG. 4A JOIN-PROCEDURE

EP 2 709 386 A1

# FIG. 4B JOIN-PROCEDURE TRIGGERED BY A BEACON, WHICH USES ΔTSF, SHORT SCAN

DEVICE 100D (YOUNGER GROUP 10Y)

RECEIVE BEACON 140A (FIG. 1E)

SCAN REPORT 166

DECIDE TO JOIN GROUP 10X (FIG. 1E) 167

RECEIVE BEACON 140A' (FIG. 1F)

JOIN GROUP 10X (FIG. 1F) 169

SLEEP 165 SCAN AWAKE SLEEP 168 SHORT SCAN SLEEP AWAKE SLEEP

TSF(A)' - TSF(D)=ΔTSF'

ΔTSF' - ΔTSF < TH CONCLUDE SAME GROUP

DEVICE 100A (OLDER GROUP 10X)

BEACON 140A

BEACON 140A'

TBTT(7) TBTT(8) TBTT(9) TBTT(10) TBTT(11) TBTT(12)

SLEEP SLEEP SLEEP SLEEP SLEEP SLEEP
AWAKE AWAKE AWAKE AWAKE AWAKE

BEACON 140A FROM DEVICE 100A WHILE DEVICE 100D SCANNING (FIG. 1E)

BEACON 140A' FROM DEVICE 100A WHILE DEVICE 100D SCANNING (FIG. 1F)

EP 2 709 386 A1

# FIG. 4C   JOIN-PROCEDURE TRIGGERED BY A RESPONSE MESSAGE, WHICH USES ΔTSF, TSF ADJUSTMENT

RECEIVED
BEACON
RESPONSE
MESSAGE 144A
(FIG. 1H)

BEACON 140D
(FIG. 1G)

DECIDE TO JOIN
GROUP 10X
(FIG. 1H)

172

JOIN GROUP 10X,
ESTIMATE TSF(D)
(FIG. 1I)

173

LATER
BEACON
140A"
(FIG. 1J)

ADJUST TSF(D)
TO MINIMIZE
ΔTSF" - ΔTSF = Z
(FIG. 1J)

DEVICE 100D
(YOUNGER
GROUP 10Y)

SLEEP          SLEEP              SLEEP                              SCAN

AWAKE                              AWAKE

TSF(A)" - TSF(D)=ΔTSF"

ΔTSF" - ΔTSF = Z
ADJUST TSF(D) TO MINIMIZE Z

LATER BEACON
140A"

RECEIVED
BEACON
140D

BEACON
RESPONSE
MESSAGE
144A

TBTT(7)        TBTT(8)        TBTT(9)      TBTT(10)      TBTT(T)           TBTT(T+1)

DEVICE 100A
(OLDER
GROUP 10X)

SLEEP        SCAN          SLEEP                  SLEEP              SLEEP

AWAKE        170        AWAKE         AWAKE                    AWAKE

BEACON 140D FROM DEVICE 100D
WHILE DEVICE 100A SCANNING
(FIG. 1G)

EP 2 709 386 A1

# FIG. 4D

JOIN-PROCEDURE TRIGGERED BY A BEACON, WHICH USES ΔTSF, TSF ADJUSTMENT

# FIG. 5

SIGNALING DIAGRAM OF JOIN-PROCEDURE THAT
USES ΔTSF

DEVICE 100D

| DEVICE 100D LLC BEACON GROUP 10Y | HOST-MAC INTERFACE | DEVICE 100D MAC BEACON GROUP 10Y | OVER-AIR INTERFACE | DEVICE 100A MAC BEACON GROUP 10X |

BEACON OR BEACON RESPONSE MESSAGE

SCAN OR RECEPTION REPORT

(1)

JOIN (GROUP 10X, ΔTSF, THRESHOLD)

(2)

BEACON

(3)

JOIN RESPONSE (BEACON GROUP 10X)

(4)

DEVICE IN BEACON GROUP 10Y JOINED TO BEACON GROUP 10X

EP 2 709 386 A1

# FIG. 6

SIGNALING DIAGRAM OF JOIN-PROCEDURE THAT USES ΔTSF

EP 2 709 386 A1

FIG. 7

Europäisches
Patentamt

European
Patent Office

Office européen
des brevets

# EUROPEAN SEARCH REPORT

Application Number

EP 13 17 7562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | US 2013/044739 A1 (HUANG SHUN-YONG [TW]) 21 February 2013 (2013-02-21) * paragraphs [0021] - [0031] * * paragraphs [0033] - [0042] * ----- | 1-15 | INV. H04W8/00 |
| A | "IEEE Standard for Information Technology--Telecommunications and information exchange between systems--Local and metropolitan area networks--Specific requirements Part 11: Wireless LAN Medium Access Control (MAC) and Physical Layer (PHY) specifications Amendment 10: Mesh Networking;IEEE Std 802.11s-", IEEE STANDARD, IEEE, PISCATAWAY, NJ, USA, 10 September 2011 (2011-09-10), pages 1-372, XP068050188, ISBN: 978-0-7381-6731-2 * 11C.12 * * 11C.12.3 * * 11C.12.4.2.2 * ----- | 1-15 | |
| A | US 2007/014269 A1 (SHERMAN ITAY [IL] ET AL) 18 January 2007 (2007-01-18) * paragraphs [0061] - [0067] * * paragraphs [0081] - [0085] * ----- | 1-15 | TECHNICAL FIELDS SEARCHED (IPC) H04W |
| A | US 7 768 981 B1 (DONOVAN TIMOTHY J [US] ET AL) 3 August 2010 (2010-08-03) * column 2, line 50 - column 7, line 17 * ----- | 1-15 | |
| A | US 2008/194201 A1 (SINIVAARA HASSE [FI] ET AL) 14 August 2008 (2008-08-14) * paragraphs [0042] - [0052] * ----- | 1-15 | |

The present search report has been drawn up for all claims

| Place of search | Date of completion of the search | Examiner |
|---|---|---|
| Munich | 5 February 2014 | Mele, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 17 7562

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2014

| Patent document cited in search report | | Publication date | Patent family member(s) | | Publication date |
|---|---|---|---|---|---|
| US 2013044739 | A1 | 21-02-2013 | CN 102958080 A<br>TW 201311025 A<br>US 2013044739 A1 | | 06-03-2013<br>01-03-2013<br>21-02-2013 |
| US 2007014269 | A1 | 18-01-2007 | NONE | | |
| US 7768981 | B1 | 03-08-2010 | US 7768981 B1<br>US 8218516 B1<br>US 8619739 B1 | | 03-08-2010<br>10-07-2012<br>31-12-2013 |
| US 2008194201 | A1 | 14-08-2008 | AT 518332 T<br>CN 1973487 A<br>EP 1762041 A1<br>KR 20070032735 A<br>US 2008194201 A1<br>WO 2006000617 A1 | | 15-08-2011<br>30-05-2007<br>14-03-2007<br>22-03-2007<br>14-08-2008<br>05-01-2006 |

For more details about this annex : see Official Journal of the European Patent Office, No. 12/82